# EUROPEAN PATENT APPLICATION

(11) **EP 4 836 552 A1**
(43) Date of publication of application: **04.11.2026**
(21) Application number: 24910998.4
(22) Date of filing: 23.12.2024
(51) Int. Cl.: H04W 64/00, H04L 41/16

(54) **NETWORK ELEMENT SEARCHING METHOD AND APPARATUS, NETWORK ELEMENT REGISTRATION METHOD AND APPARATUS, AND COMMUNICATION DEVICE**

(30) Priority: 29.12.2023 CN 202311857641
(71) Applicant: Vivo Mobile Communication Co., Ltd., Dongguan, Guangdong 523863 (CN)
(72) Inventor: CHENG, Sihan, Dongguan, Guangdong 523863 (CN); CHONG, Weiwei, Dongguan, Guangdong 523863 (CN)
(74) Representative: Conti, Marco
(86) International application number: PCT/CN2024/141278
(87) International publication number: WO 2025/140070

(57) **Abstract**

This application discloses a network function discovery method and apparatus, a network function registration method and apparatus, and a communication device, pertaining to the field of communication technologies. The network function discovery method in embodiments of this application includes: A first network function receives a first message from a second network function, where the first message is used to request to discover a network function supporting a model training capability, and the model training capability comprises a positioning model training capability. The first network function sends a second message to the second network function, where the second message is used to feed back a network function discovery result.

## Description

### CROSS-REFERENCE TO RELATED APPLICATIONS

This application claims priority to Chinese Patent Application No. 202311857641.4, filed on December 29, 2023, which is incorporated herein by reference in its entirety.

### TECHNICAL FIELD

This application pertains to the field of communication technologies, and specifically, to a network function discovery method and apparatus, a network function registration method and apparatus, and a communication device.

### BACKGROUND

In the related art, a location service (LoCation Service, LCS) is provided and performed by a plurality of network functions such as an access and mobility management function (Access and Mobility Management Function, AMF) and a location management function (Location Management Function, LMF) in a core network, and positioning accuracy is low.

### SUMMARY

Embodiments of this application provide a network function discovery method and apparatus, a network function registration method and apparatus, and a communication device, to resolve the problem of low positioning accuracy in the related art.

According to a first aspect, a network function discovery method is provided, performed by a first network function. The method includes:
receiving, by the first network function, a first message from a second network function, where the first message is used to request to discover a network function supporting a model training capability, and the model training capability includes a positioning model training capability; and
sending, by the first network function, a second message to the second network function, where the second message is used to feed back a network function discovery result.

According to a second aspect, a network function discovery method is provided, performed by a second network function. The method includes:
sending, by the second network function, a first message to a first network function, where the first message is used to request to discover a network function supporting a model training capability, and the model training capability includes a positioning model training capability; and
receiving, by the second network function, a second message from the first network function, where the second message is used to feed back a network function discovery result.

According to a third aspect, a network function discovery method is provided, performed by a third network function. The method includes:
receiving, by the third network function, a fourth message from a second network function, where the fourth message is used to request to obtain a target model, and the target model includes a positioning model.

According to a fourth aspect, a network function discovery method is provided, performed by a first device. The method includes:
sending, by the first device, a sixth message to a second network function, where the sixth message is used to request to obtain a target model, and the target model includes a positioning model.

According to a fifth aspect, a network function registration method is provided, performed by a first network function. The method includes:
receiving, by the first network function, a third message from a third network function, where the third message is used to request to register related information of the third network function, the third message includes tenth information, the tenth information indicates that the third network function supports a model training capability, and the model training capability includes a positioning model training capability.

According to a sixth aspect, a network function registration method is provided, performed by a third network function. The method includes:
sending, by the third network function, a third message to a first network function, where the third message is used to request to register related information of the third network function, the third message includes tenth information, the tenth information indicates that the third network function supports a model training capability, and the model training capability includes a positioning model training capability.

According to a seventh aspect, a network function discovery apparatus is provided, applied to a first network function. The apparatus includes:
a first receiving module, configured to receive a first message from a second network function, where the first message is used to request to discover a network function supporting a model training capability, and the model training capability includes a positioning model training capability; and
a sending module, configured to send a second message to the second network function, where the second message is used to feed back a network function discovery result.

According to an eighth aspect, a network function discovery apparatus is provided, applied to a second network function. The apparatus includes:
a first sending module, configured to send a first message to a first network function, where the first message is used to request to discover a network function supporting a model training capability, and the model training capability includes a positioning model training capability; and
a first receiving module, configured to receive a second message from the first network function, where the second message is used to feed back a network function discovery result.

According to a ninth aspect, a network function discovery apparatus is provided, applied to a third network function. The apparatus includes:
a receiving module, configured to receive a fourth message from a second network function, where the fourth message is used to request to obtain a target model, and the target model includes a positioning model.

According to a tenth aspect, a network function discovery apparatus is provided, applied to a first device. The apparatus includes:
a sending module, configured to send a sixth message to a second network function, where the sixth message is used to request to obtain a target model, and the target model includes a positioning model.

According to an eleventh aspect, a network function registration apparatus is provided, applied to a first network function. The apparatus includes:
a receiving module, configured to receive a third message from a third network function, where the third message is used to request to register related information of the third network function, the third message includes tenth information, the tenth information indicates that the third network function supports a model training capability, and the model training capability includes a positioning model training capability.

According to a twelfth aspect, a network function registration apparatus is provided, applied to a third network function. The apparatus includes:
a sending module, configured to send a third message to a first network function, where the third message is used to request to register related information of the third network function, the third message includes tenth information, the tenth information indicates that the third network function supports a model training capability, and the model training capability includes a positioning model training capability.

According to a thirteenth aspect, a communication device is provided. The communication device includes a processor and a memory, the memory stores a program or instructions capable of running on the processor, and the program or the instructions are executed by the processor to implement steps of the method according to the first aspect, the second aspect, the third aspect, the fourth aspect, the fifth aspect, or the sixth aspect.

According to a fourteenth aspect, a communication device is provided, including a processor and a communication interface. The communication interface is configured to: receive a first message from a second network function, where the first message is used to request to discover a network function supporting a model training capability, and the model training capability includes a positioning model training capability; and send a second message to the second network function, where the second message is used to feed back a network function discovery result.

Alternatively,
the communication interface is configured to: send a first message to a first network function, where the first message is used to request to discover a network function supporting a model training capability, and the model training capability includes a positioning model training capability; and receive a second message from the first network function, where the second message is used to feed back a network function discovery result.

Alternatively,
the communication interface is configured to: receive a fourth message from a second network function, where the fourth message is used to request to obtain a target model, and the target model includes a positioning model.

Alternatively,
the communication interface is configured to: send a sixth message to a second network function, where the sixth message is used to request to obtain a target model, and the target model includes a positioning model.

Alternatively,
the communication interface is configured to: receive a third message from a third network function, where the third message is used to request to register related information of the third network function, the third message includes tenth information, the tenth information indicates that the third network function supports a model training capability, and the model training capability includes a positioning model training capability.

Alternatively,
the communication interface is configured to: send a third message to a first network function, where the third message is used to request to register related information of the third network function, the third message includes tenth information, the tenth information indicates that the third network function supports a model training capability, and the model training capability includes a positioning model training capability.

According to a fifteenth aspect, a readable storage medium is provided. The readable storage medium stores a program or instructions, and the program or the instructions are executed by a processor to implement steps of the method according to the first aspect, the second aspect, the third aspect, the fourth aspect, the fifth aspect, or the sixth aspect.

According to a sixteenth aspect, a wireless communication system is provided, including a first network function and a second network function. The first network function may be configured to perform steps of the method according to the first aspect, and the second network function may be configured to perform steps of the method according to the second aspect.

According to a seventeenth aspect, a wireless communication system is provided, including a first network function and a third network function. The first network function may be configured to perform steps of the method according to the fifth aspect, and the third network function may be configured to perform steps of the method according to the sixth aspect.

According to an eighteenth aspect, a chip is provided. The chip includes a processor and a communication interface, the communication interface is coupled to the processor, and the processor is configured to run a program or instructions to implement the method according to the first aspect, the second aspect, the third aspect, the fourth aspect, the fifth aspect, or the sixth aspect.

According to a nineteenth aspect, a computer program/program product is provided. The computer program/program product is stored in a storage medium, and the program/program product is executed by at least one processor to implement steps of the method according to the first aspect, the second aspect, the third aspect, the fourth aspect, the fifth aspect, or the sixth aspect.

In embodiments of this application, a first network function receives a first message from a second network function, where the first message is used to request to discover a network function supporting a model training capability, and the model training capability includes a positioning model training capability; and the first network function sends a second message to the second network function, where the second message is used to feed back a network function discovery result. In this way, the network function supporting the positioning model training capability is discovered, so that a positioning model can participate in a positioning service, thereby improving positioning accuracy.

### BRIEF DESCRIPTION OF DRAWINGS

FIG. 1 is a block diagram of a wireless communication system according to an embodiment of this application;
FIG. 2 is a flowchart of MT-LR in the related art;
FIG. 3 shows five cases of AI positioning defined in the related art;
FIG. 4 is a flowchart of a network function discovery method according to an embodiment of this application;
FIG. 5 is a flowchart of a network function discovery method according to an embodiment of this application;
FIG. 6 is a flowchart of a network function discovery method according to an embodiment of this application;
FIG. 7 is a flowchart of a network function discovery method according to an embodiment of this application;
FIG. 8 is a flowchart of a network function registration method according to an embodiment of this application;
FIG. 9 is a flowchart of a network function registration method according to an embodiment of this application;
FIG. 10 is a flowchart of Embodiment 1 according to embodiments of this application;
FIG. 11 is a flowchart of Embodiment 2 according to embodiments of this application;
FIG. 12 is a flowchart of Embodiment 3 according to embodiments of this application;
FIG. 13 is a structural diagram of a network function discovery apparatus according to an embodiment of this application;
FIG. 14 is a structural diagram of a network function discovery apparatus according to an embodiment of this application;
FIG. 15 is a structural diagram of a network function discovery apparatus according to an embodiment of this application;
FIG. 16 is a structural diagram of a network function discovery apparatus according to an embodiment of this application;
FIG. 17 is a structural diagram of a network function registration apparatus according to an embodiment of this application;
FIG. 18 is a structural diagram of a network function registration apparatus according to an embodiment of this application;
FIG. 19 is a structural diagram of a communication device according to an embodiment of this application;
FIG. 20 is a schematic diagram of a hardware structure of a terminal according to an embodiment of this application;
FIG. 21 is a schematic diagram of a hardware structure of an access network device according to an embodiment of this application; and
FIG. 22 is a schematic diagram of a hardware structure of a core network device according to an embodiment of this application.

### DESCRIPTION OF EMBODIMENTS

The following clearly describes technical solutions in embodiments of this application with reference to accompanying drawings in embodiments of this application. Clearly, the described embodiments are merely some rather than all embodiments of this application. All other embodiments obtained by a person of ordinary skill in the art based on embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that embodiments of this application can be implemented in an order other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be a direct indication (or an explicit indication) or an indirect indication (or an implicit indication). The direct indication may be understood as follows: A sender explicitly notifies, in the sent indication, a receiver of specific information, an operation that needs to be performed, a request result, or other content. The indirect indication may be understood as follows: The receiver determines corresponding information based on the indication sent by the sender, or performs determining based on the indication sent by the sender, and determines, based on a determining result, the operation that needs to be performed, the request result, or the like.

It should be noted that a technology described in embodiments of this application is not limited to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, or a single-carrier frequency-division multiple access (Single-carrier Frequency-Division Multiple Access, SC-FDMA) system. The terms "system" and "network" are often used interchangeably in embodiments of this application. The technology described may be used for the above-mentioned systems and radio technologies, as well as other systems and radio technologies. The following describes a new radio (New Radio, NR) system for illustrative purposes, and NR terms are used in most of the following descriptions. However, these technologies are also applicable to systems such as a 6^{th} generation (6^{th} Generation, 6G) communication system other than the NR system.

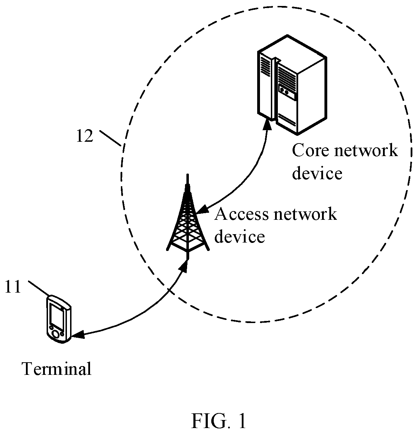

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), vessel-borne equipment, pedestrian user equipment (Pedestrian User Equipment, PUE), a smart home device (a home device having a wireless communication function, for example, a refrigerator, a television, a laundry machine, or furniture), a game console, a personal computer (Personal Computer, PC), a teller machine, a self-service machine, or other terminal side devices. The wearable device includes: a smartwatch, a smart band, a smart headset, smart glasses, smart jewelry (a smart bracelet, a smart wristlet, a smart ring, a smart necklace, a smart anklet, a smart leglet, or the like), a smart wristband, smart clothing, or the like. The vehicle user equipment may also be referred to as a vehicle-mounted terminal, a vehicle-mounted controller, a vehicle-mounted module, a vehicle-mounted component, a vehicle-mounted chip, an on-board unit, or the like. In addition to the terminal device, the terminal 11 may be a chip in a terminal, such as a modem (Modem) chip or a system on chip (System on Chip, SoC). It should be noted that a specific type of the terminal 11 is not limited in this embodiment of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (NodeB, NB), an evolved NodeB (Evolved NodeB, eNB), a next generation NodeB (next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the field. The base station is not limited to a specific technical term, provided that the same technical effects can be achieved. It should be noted that in embodiments of this application, only a base station in an NR system is used as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), a location management function (location manage function, LMF), a gateway mobile location center (Gateway Mobile Location Center, GMLC), a network data analytics function (network data analytics function, NWDAF), or the like. It should be noted that in embodiments of this application, only a core network device in an NR system is used as an example for description, and a specific type of the core network device is not limited.

This application relates to a location service (LoCation Service, LCS) and an artificial intelligence (Artificial Intelligence, AI) technology, which are first described below.

The LCS is provided and performed by network functions such as an AMF and an LMF in a core network. LCS messages are exchanged between user equipment (User Equipment, UE) and an LCS client (client) or an AF. A typical procedure is about a mobile terminated location request (Mobile Terminated Location Request, MT-LR).

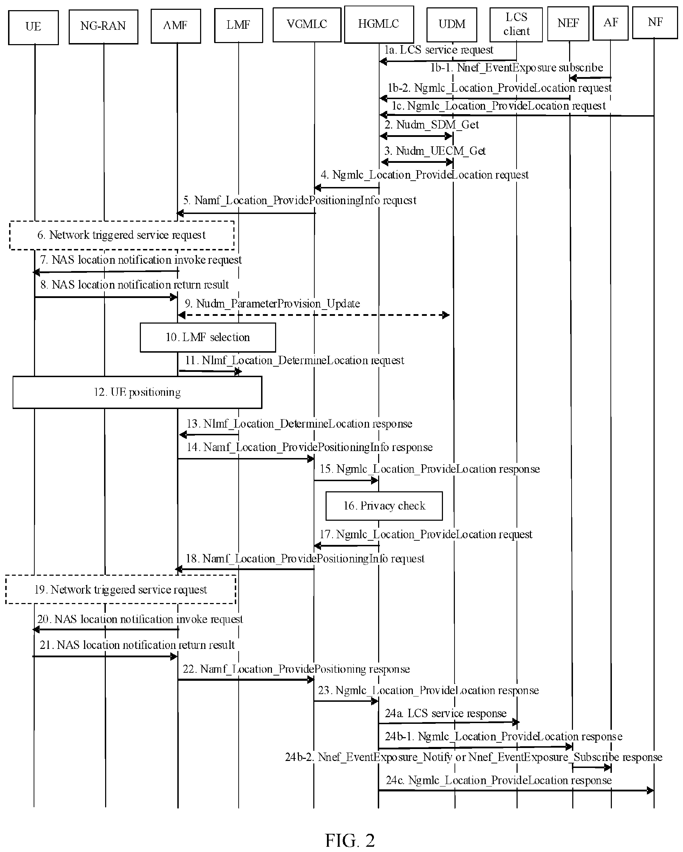

FIG. 2 shows an MT-LR procedure. As shown in FIG. 2, the MT-LR procedure is initiated by an external third-party application (that is, an LCS client) or is initiated by an AF via an NEF, and location information of UE is finally obtained through network functions such as a GMLC, an AMF, and an LMF. Some steps in FIG. 2 are described as follows:
Step 1a (or 1b-1, 1b-2, or 1-c): The LCS client, a network function entity (Network Function, NF), or the AF (via the NEF) sends a request to the (H)GMLC to obtain a location and a velocity (optional) of target UE. The UE may be identified by a generic public subscription identifier (Generic Public Subscription Identifier, GPSI) or a subscription permanent identifier (Subscription Permanent Identifier, SUPI). For example, in step 1c, the NF (for example, an NWDAF) invokes an Ngmlc_Location_ProvideLocation service operation to the (H)GMLC.
Step 2: The (H)GMLC invokes an Nudm_SDM_Get service operation towards a UDM of the target UE to obtain privacy setting of the UE identified by its GPSI or SUPI. The UDM returns target UE privacy setting of the UE. The (H)GMLC checks a UE LCS privacy profile.
Step 5: The (H)GMLC or a visited gateway mobile location center (Visited Gateway Mobile Location Center, VGMLC) invokes an Namf_Location_ProvidePositioningInfo service operation towards the AMF to request a current location of the UE. The service operation includes the SUPI and a client type, and may include required quality of service (Quality of Service, QoS), a supported universal geographical area description (Universal Geographical Area Description, GAD) shape, a scheduled location time, a service type, and other attributes received or determined in step 1.
Steps 10 to 13: The AMF selects an LMF based on available information defined in a related standard protocol or based on a local configuration of the AMF. A 5G access network (5G Access Network, 5G-AN) that currently serves the UE is considered during selection of the LMF. NRF query may be used for selection.

The AMF invokes an Nlmf_Location_DetermineLocation service operation towards the LMF to request the current location of the UE.

The LMF performs one or more positioning procedures described in a related standard protocol. In this step, the LMF may transmit a positioning-related N1 message to the UE, or transmit a network positioning message to a serving next generation radio access network (Next Generation Radio Access Network, NG-RAN) node (a gNB or an NG-eNB) of the UE by using an Namf_Communication_N1N2MessageTransfer service operation request. The LMF shall determine a geographic location and may optionally determine a location in local coordinates.

Step 22: The AMF returns an Namf_Location_ProvidePositioningInfo response towards the (V)GMLC (or the home gateway mobile positioning center (Home Gateway Mobile Location Center, HGMLC) used for roaming when an NL3 reference point is not supported), and indicates a notification result.

Step 24a (or 24b-1, 24b-2, or 24c): If the LCS client, the NF, or the AF is allowed to locate the target UE, the (H)GMLC sends a location service response to the LCS client, the NF, or the AF (via the NEF).

It should be noted that positioning in the procedure shown in FIG. 2 has low positioning accuracy.

With development of AI technologies, AI technologies are gradually applied to more scenarios. AI technologies are expected to be applied to communication scenarios (for example, positioning scenarios). For example, network functions responsible for operations (such as model training and model inference) related to intelligence of the core network may be deployed in the core network.

An AI positioning model (or referred to as a machine learning (Machine Learning, ML) positioning model) may perform positioning directly through inference or in an assisted manner, so that a large quantity of measurement resources can be saved, computational power consumption can be reduced, and a more accurate positioning result can be generated.

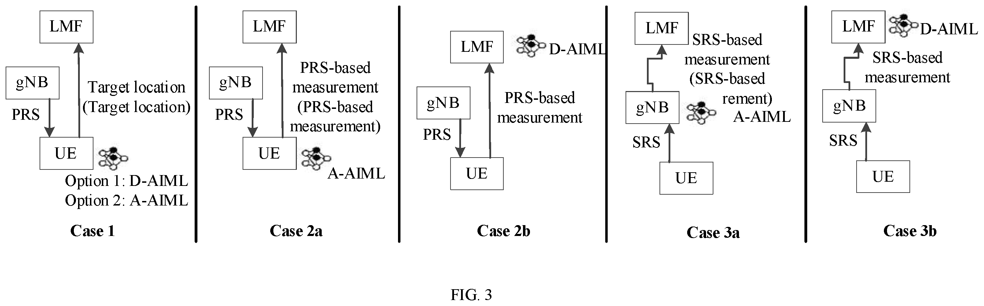

In related discussion, five cases of AI positioning (positioning) are defined. As shown in FIG. 3, in cases 1, 2a, and 2b, downlink positioning is performed, and a positioning reference signal (Positioning Reference Signal, PRS) is sent; in cases 3a and 3b, uplink positioning is performed, and a sounding reference signal (Sounding Reference Signal, SRS) is sent. In cases 1 and 2a, an AI positioning model is set on a terminal. As shown in FIG. 3, in case 1 or 2a, UE may measure a PRS sent by a base station, and then obtain AI positioning information through inference based on measurement information by using the AI positioning model. In case 3a, an AI positioning model is set on a gNB side. As shown in FIG. 3, a base station may receive SRS measurement information reported by UE, and then obtain AI positioning information through inference based on the measurement information by using the AI positioning model. In cases 2b and 3b, an AI positioning model is set on an LMF side. As shown in FIG. 3, in case 2b, UE reports PRS-based measurement information to an LMF, and the LMF inputs the measurement information reported by the UE to the AI positioning model to obtain an AI positioning result; or as shown in FIG. 3, in case 3b, a base station reports SRS-based measurement information to an LMF, and the LMF inputs the measurement information reported by the base station to the AI positioning model to obtain an AI positioning result.

However, no related standard protocol specifies that the core network can train a model, or specifies capabilities required by network functions to support model training, or specifies how a network function or device obtains a required model from another network function after the another network function trains the model.

In view of this, this application provides a network function discovery method and apparatus, a network function registration method and apparatus, and a communication device, to resolve the problem of low positioning accuracy in the related art

The following describes, in detail with reference to accompanying drawings, the network function discovery method, the network function registration method, the network function discovery method apparatus, and the network function registration apparatus according to embodiments of this application by using some embodiments and application scenarios thereof.

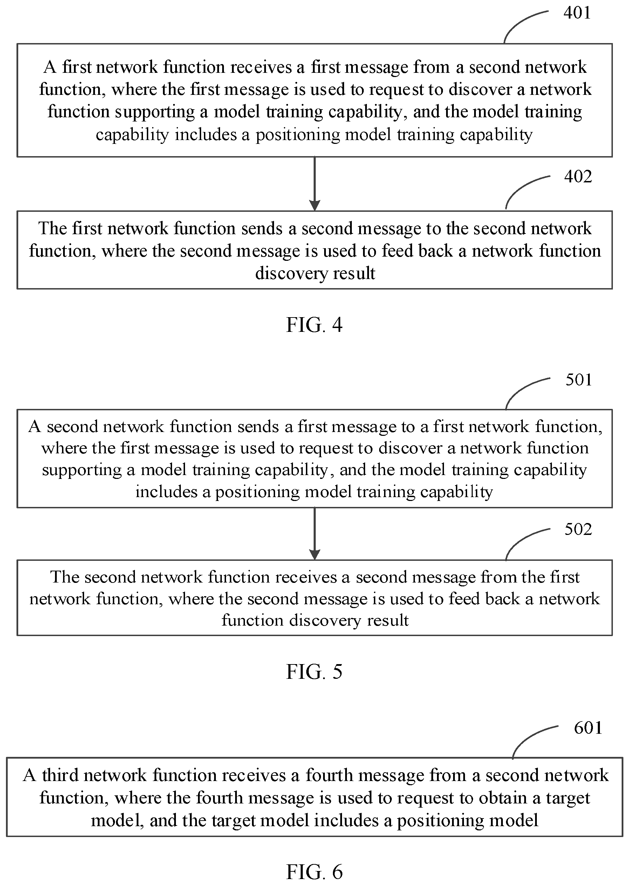

FIG. 4 is a flowchart of a network function discovery method according to an embodiment of this application. As shown in FIG. 4, the network function discovery method includes the following steps:
Step 401: A first network function receives a first message from a second network function, where the first message is used to request to discover a network function supporting a model training capability, and the model training capability includes a positioning model training capability.
Step 402: The first network function sends a second message to the second network function, where the second message is used to feed back a network function discovery result.

In this embodiment of this application, the first network function may be a network function having a storage function, and the first network function may store network function information, thereby possessing a capability and prerequisite to discover a network function. The first network function may be a network function of a core network. The first network function may be, for example, a network function such as an NRF or an AMF.

The second network function can communicate and interact with the first network function, to request the first network function to discover the network function supporting the model training capability. From a perspective of request initiation, the second network function may be a request initiator, that is, the second network function directly initiates a network function discovery request to the first network function. Alternatively, the second network function may not be a request initiator. In this case, the second network function serves as an intermediate requester, that is, another network function or device first sends a network function discovery request to the second network function, and then the second network function sends the network function discovery request to the first network function. From a perspective of a positioning demand, the second network function may be a positioning demand side, or may not be a positioning demand side. The second network function may be, for example, a core network function such as an AMF, an LMF, or an SMF.

In an implementation, the "model training capability" mentioned in this embodiment of this application is an "AI positioning model training capability" or a "capability of training an AI positioning model". In an implementation, the network function that the second network function requests to discover needs to support the capability of training the AI positioning model.

In this embodiment of this application, the model training capability includes but is not limited to the positioning model training capability. For ease of understanding, a network function supporting the model training capability may be referred to as a third network function. In an example, the third network function includes an NWDAF, a model training logical function (Model Training logical function, MTLF), an analytics logical function (Analytics logical function, AnLF), or the like.

In the related art, the NWDAF is a network data analytics function network function, supports collection of data related to network functions or terminals, and can provide statistics, prediction, and other information. The NWDAF may collect data from network functions such as the AMF and the SMF or operation, management, and maintenance (Operation, Administration, and Maintenance, OAM). For example, the NWDAF is applied to a positioning service. The NWDAF obtains location information of a terminal through data collection via the AMF, and the predicted terminal location information is coarse-grained, for example, at a tracking area (Tracking Area, TA) level or a cell (cell) level. In other words, the NWDAF needs to collect data via the AMF to predict the terminal location information, and the terminal location information is limited to a current cell or TA of the terminal. If a consumer (consumer) of the NWDAF sends a service request to the NWDAF to request the NWDAF to collect related information or provide prediction, the NWDAF collects information from different network functions based on parameters in the request message. After the NWDAF performs statistics collection and analysis, the NWDAF returns a result to the consumer of the NWDAF.

In this embodiment of this application, the NWDAF may serve as a network function supporting the model training capability, and a positioning model trained by the NWDAF can implement AI positioning. In other words, the NWDAF may be a network function supporting the AI positioning model training capability. In this embodiment of this application, the AI positioning model may obtain, through inference based on data such as collected measurement data, location information corresponding to the data. In this way, terminal location information can be more intelligently and accurately predicted.

It should be noted that, in this embodiment of this application, the NWDAF is used as a representative of the network function supporting the model training capability, and the network function supporting the model training capability may alternatively be another network function or device. This is not limited in this embodiment of this application.

In this embodiment of this application, a first network function receives a first message from a second network function, where the first message is used to request to discover a network function supporting a model training capability, and the model training capability includes a positioning model training capability; and the first network function sends a second message to the second network function, where the second message is used to feed back a network function discovery result. In this way, the network function supporting the positioning model training capability is discovered, so that a positioning model can participate in a positioning service, thereby improving positioning accuracy.

The first message may be understood as a network function discovery request or a network function discovery request. For example, the first network function is an NRF, and the second network function is an AMF. The AMF may send the network function discovery request to the NRF by using an Nnrf_NFDiscovery_Request service or the like, to request to discover a network function meeting a condition. The first message may carry network function type indication information, to indicate a type of the network function requested to be discovered. The first message may carry area indication information, to indicate a service range or the like of the network function requested to be discovered. The first message may further carry other indication information.

In some embodiments, the first message includes at least one piece of the following information:
first information indicating that the network function requested to be discovered needs to support the model training capability;
second information indicating a use object of a model trained by the network function requested to be discovered;
third information indicating a use area of the model trained by the network function requested to be discovered;
fourth information indicating a positioning case of the model trained by the network function requested to be discovered;
fifth information indicating an inference manner of the model trained by the network function requested to be discovered;
sixth information indicating an inference result type of the model trained by the network function requested to be discovered;
seventh information indicating an input data type of the model trained by the network function requested to be discovered; and
eighth information indicating a task type of the model trained by the network function requested to be discovered.

A positioning model is used as an example. The first information may be understood as indication information of a capability of training the positioning model, indicating that the network function requested to be discovered needs to support the capability of training the positioning model. The eighth information may be understood as indication information of a required positioning task, for example, an AI positioning analytics (analytics) ID or a functionality (functionality) ID.

In an implementation, the first information indicates that the network function requested to be discovered needs to support the capability of training the AI positioning model.

It should be noted that the first information may be explicit indication information, or may be implicit indication information. In a case of explicit indication information, the first message needs to include the first information. In a case of implicit indication information, the first message does not need to include the first information, but may indicate, by using a message name or other information associated with the first information, that the network function requested to be discovered needs to support the model training capability.

Optionally, the second information may be understood as indicating that the model trained by the network function requested to be discovered supports/permits/allows use by a specific type of device, for example, UE, a positioning reference unit (Positioning Reference Unit, PRU), a gNB, or an LMF. It should be noted that the trained model may be a positioning model or an AI positioning model.

Optionally, the third information may be understood as indicating that the model trained by the network function requested to be discovered supports/permits/allows use in a specific use area.

When the first message includes the second information and the third information, it may be understood that the first message indicates the model trained by the network function requested to be discovered supports/permits/allows use by a specific type of device in a specific use area, such as a cell or a TA.

Optionally, the fourth information may be understood as a positioning case permits/allows to be used by the model trained by the network function requested to be discovered, that is, for a specific positioning case, the model trained by the network function can be used, or in other words, the model is trained for a specific positioning case. Specifically, the positioning case may be, for example, an uplink positioning method, a downlink positioning method, a PRS-based positioning method, or an SRS-based positioning method. It should be noted that the positioning case may alternatively be an uplink positioning method based on AI/ML, a downlink positioning method based on AI/ML, a positioning method based on AI/ML and a PRS, a positioning method based on AI/ML and an SRS, or the like. It should be noted that the positioning case may alternatively be directly corresponding to case 1, case 2a, case 2b, case 3a, case 3b, or the like in the existing discussion.

It should be noted that in this specification, the positioning case and the positioning method have similar meanings, and may be replaced with each other.

Optionally, the fifth information may be understood as a specific inference manner used by the model trained by the network function requested to be discovered, that is, for a specific inference manner, the model trained by the network function can be used, or in other words, the model is trained for a specific inference manner. Specifically, the inference manner may be, for example, direct inference positioning or indirect inference positioning. It should be noted that the direct inference positioning means that a device directly obtains a positioning result, or directly obtains a positioning result based on a model, that is, an AI/ML positioning model is used and an output result of the model is the positioning result; the indirect inference positioning means that a device cannot directly obtain a positioning result, but may obtain information such as an intermediate feature, or in other words, the device may obtain information such as an intermediate feature based on a model, that is, an AI/ML positioning model is used and an output result of the model is the intermediate feature, and the device further needs to perform further processing/computing based on the intermediate feature, to obtain the positioning result.

Optionally, the sixth information may be understood as a specific type of an inference result of the model trained by the network function requested to be discovered, or a type of data that needs to be output by the model trained by the network function. Specifically, the inference result type may be understood as an inference result type of the positioning model, such as intermediate feature data or location (location) information.

Optionally, the seventh information may be understood as a specific type of input data of the model trained by the network function requested to be discovered, or a type of data that needs to be input to the model trained by the network function. For example, positioning-related data used for training of the positioning model includes: measurement data, such as a channel impulse response (Channel Impulse Response, CIR), a power delay profile (Power Delay Profile, PDP), a delay profile (Delay Profile, DP), reference signal received power (Reference Signal Received Power, RSRP), a reference signal received power path (Reference Signal Received Power Path, RSRPP), or a reference signal time difference (Reference Signal Time Difference, RSTD); intermediate feature (Intermediate feature) data, such as a time of arrival (Time of Arrival, TOA) or a path phase (path phase); and assistance data (assistance data), such as a reference signal (Reference Signal, RS) configuration (configuration).

It should be noted that the information in this embodiment of this application may be indication information. For example, the first information may be first indication information, the second information may be second indication information, and so on.

In this embodiment, one or more pieces of the foregoing information are carried in the first message, so that the network function requested to be discovered can better meet a requirement.

In some embodiments, the second message includes either one of the following:
information about a target network function, where the target network function is a network function supporting the model training capability; and
ninth information indicating a discovery failure.

After step 401, the first network function may search the network function information (for example, network function registration information) stored in the first network function to find out whether there is at least one target network function supporting the model training capability. If the first network function finds a target network function, the first network function may feed back information about the target network function to the second network function by using the second message, which may include information such as network function information and capability information of the target network function. For example, the network function information includes information such as identification information (for example, an NF instance ID (instance ID), a fully qualified domain name (Fully Qualified Domain Name, FQDN), an NF IP address (address), or a network function instance identifier), an NF type (type), or a network function type of the target network function. If the discovery of the first network function fails, that is, no network function supporting the model training capability is found, the first network function may feed back, to the second network function by using the second message, a response message indicating the discovery failure.

It should be noted that the target network function may be one or more of the foregoing third network functions.

In some embodiments, the method further includes:
The first network function determines the target network function based on the first message, where information about the target network function matches information in the first message.

After step 401 and before step 402, the first network function may compare information in the first message sent by the second network function in step 401 with the network function information (such as the network function registration information), to find at least one target network function meeting a condition. That the information about the target network function matches the information in the first message may be understood as that the information about the target network function is the same as the information in the second message, or the information in the first message includes the information about the target network function, or the information about the target network function includes the information in the first message.

In this embodiment, a network function matching the information in the first message is determined as a target network function, so that the determined target network function can better meet a requirement.

In some embodiments, that the first network function determines the target network function based on the first message includes at least one of the following:

The first network function determines the target network function based on the first information, where the first message includes the first information, the first information indicates that the network function requested to be discovered needs to support the model training capability, and the target network function is a network function supporting the model training capability.

The first network function determines the target network function based on the second information, where the first message includes the second information, the second information indicates the use object of the model trained by the network function requested to be discovered, and a use object of a model trained by the target network function matches the second information.

The first network function determines the target network function based on the third information, where the first message includes the third information, the third information indicates the use area of the model trained by the network function requested to be discovered, and a use area of the model trained by the target network function matches the third information.

The first network function determines the target network function based on the fourth information, where the first message includes the fourth information, the fourth information indicates the positioning case of the model trained by the network function requested to be discovered, and a positioning case of the model trained by the target network function matches the fourth information.

The first network function determines the target network function based on the fifth information, where the first message includes the fifth information, the fifth information indicates the inference manner of the model trained by the network function requested to be discovered, and a model inference manner of the model trained by the target network function matches the fifth information.

The first network function determines the target network function based on the sixth information, where the first message includes the sixth information, the sixth information indicates the inference result type of the model trained by the network function requested to be discovered, and an inference result type of the model trained by the target network function matches the sixth information.

The first network function determines the target network function based on the seventh information, where the first message includes the seventh information, the seventh information indicates the input data type of the model trained by the network function requested to be discovered, and an input data type of the model trained by the target network function matches the seventh information.

The first network function determines the target network function based on the eighth information, where the first message includes the eighth information, the eighth information indicates the task type of the model trained by the network function requested to be discovered, and a task type of the model trained by the target network function matches the eighth information.

In an example, in a case that the first message includes the indication information of the capability of training the positioning model, the first network function may determine, depending on whether the indication information of the capability of training the positioning model matches capability indication information of each network function, whether the network function is a third network function meeting a condition. If a network function is a third network function meeting a condition, the first network function may determine the third network function as a target network function.

In another example, in a case that the first message includes indication information of the use object of the positioning model, the first network function may determine, depending on whether the indication information of the use object of the positioning model matches capability information about a use object of a positioning model trained by each network function, whether the network function is a third network function meeting a condition. If a network function is a third network function meeting a condition, the first network function may determine the third network function as a target network function.

In another example, in a case that the first message includes indication information of the use area of the positioning model, the first network function may determine, depending on whether the indication information of the use area of the positioning model matches capability information about a use area of a positioning model trained by each network function, whether the network function is a third network function meeting a condition. If a network function is a third network function meeting a condition, the first network function may determine the third network function as a target network function.

In another example, in a case that the first message includes both the indication information of the use object of the positioning model and the indication information of the use area of the positioning model, the model trained by the network function requested to be discovered in the first message supports/permits/allows use by a specific type of device in a specific use area.

In another example, in a case that the first message includes both the indication information of the capability of training the positioning model and the indication information of the use object of the positioning model, the first network function may determine, depending on whether the indication information of the capability of training the positioning model matches capability indication information of each network function and whether the indication information of the use object of the positioning model matches capability information about a use object of a positioning model trained by the network function, whether the network function is a third network function meeting a condition. If capability indication information of a third network function matches the indication information of the capability of training the positioning model, and capability information about a use object of a positioning model trained by the third network function matches the indication information of the use object of the positioning model, the first network function may determine the network function as a target network function.

Another matching manner is similar thereto, and details are not described herein.

In this embodiment of this application, the information about the target network function determined by the first network function may be from information sent by another network function in advance, or may be from registration information provided when the target network function registers with the first network function in advance. The following provides a related solution in which the target network function registers with the first network function.

In some embodiments, the method further includes:
The first network function receives a third message from the target network function, where the third message is used to request to register related information of the target network function.

The third message may be understood as a registration request message. The third message may carry all information that the target network function requests to register, and may include information such as network function information and capability information of the target network function. For example, the network function information includes information such as identification information (for example, an NF instance ID (instance ID), a fully qualified domain name (Fully Qualified Domain Name, FQDN), an NF IP address (address), or a network function instance identifier), an NF type (type), or a network function type of the target network function.

In some embodiments, the third message includes at least one piece of the following information:
tenth information indicating that the target network function supports the model training capability, where the model training capability includes the positioning model training capability;
eleventh information indicating a use object of a model corresponding to the model training capability;
twelfth information indicating a use area of the model corresponding to the model training capability;
thirteenth information indicating a positioning case of the model corresponding to the model training capability;
fourteenth information indicating an inference manner of the model corresponding to the model training capability;
fifteenth information indicating an inference result type of the model corresponding to the model training capability;
sixteenth information indicating an input data type of the model corresponding to the model training capability; and
seventeenth information indicating a task type of the model corresponding to the model training capability.

The third message may carry network function capability information, and all the foregoing information may be understood as network function capability information. For example, the tenth information may be understood as indicating that the network function supports training of a model used for (AI) positioning, or indicating that the network function supports a capability of training a positioning-related model.

For example, the model training capability is training a positioning model. The (supported) use object of the model may be understood as an object allowed to use the positioning model, such as UE, a PRU, a gNB, or an LMF.

The (supported) use area of the model may be understood as an area in which the positioning model is allowed to or can be used, such as a cell or a TA.

The (supported) positioning case of the model may be understood as a positioning method supported by the positioning model, for example, an uplink positioning method, a downlink positioning method, a PRS-based positioning method, or an SRS-based positioning method. It should be noted that the positioning case may alternatively be an uplink positioning method based on AI/ML, a downlink positioning method based on AI/ML, a positioning method based on AI/ML and a PRS, a positioning method based on AI/ML and an SRS, or the like. It should be noted that the positioning case may alternatively be directly corresponding to case 1, case 2a, case 2b, case 3a, case 3b, or the like in the existing discussion.

The (supported) inference manner of the model may be understood as a positioning inference manner supported by the positioning model, such as direct inference positioning or indirect inference positioning.

The (supported) input data type of the model may be understood as a type of data that needs to be input to the model. For example, positioning-related data used for training of the positioning model includes: measurement data, such as a channel impulse response (Channel Impulse Response, CIR), a power delay profile (Power Delay Profile, PDP), a delay profile (Delay Profile, DP), reference signal received power (Reference Signal Received Power, RSRP), a reference signal received power path (Reference Signal Received Power Path, RSRPP), or a reference signal time difference (Reference Signal Time Difference, RSTD); intermediate feature (Intermediate feature) data, such as a time of arrival (Time of Arrival, TOA) or a path phase (path phase); and assistance data (assistance data), such as a reference signal (Reference Signal, RS) configuration (configuration).

The (supported) inference result type of the model may be understood as an inference result type of the positioning model, such as intermediate feature data or location (location) information.

The (supported) task type of the model may be understood as a type of a positioning task supported by the positioning model. The type of the positioning task may be indicated by using an identifier of a positioning task supported by the third network function, such as an analytics ID for AI positioning (for example, the analytics ID indicates AI positioning). Alternatively, the type of the positioning task may be indicated by using a model function type or task description information, for example, a supported model type (supported model type), a functionality ID, an analytics ID, or a task type (task type), which is used to describe a function or purpose of the supported model.

Any information included in the third message may be used as information about the target network function, and the first network function stores the information, to facilitate network function discovery of the first network function. That is, after receiving the registration request message from the target network function, the first network function may store the network function registration information or the network function capability information. The first network function may further feed back a registration response message to the target network function. Specifically, after receiving the registration request message, the first network function stores the network function registration information, and sends a response message, for example, an Nnrf_NFManagement_NFRegister response message, to notify the target network function of a registration success.

In this embodiment, the target network function registers with the first network function in advance, so that the first network function can directly obtain related information of the target network function, and the first network function can perform network function discovery more efficiently, which helps the first network function find a network function that better meets a requirement.

It should be noted that, in this embodiment, the target network function is used as a representative to describe a registration manner in this embodiment of this application, and any third network function supporting the model training capability may register with the first network function with reference to the registration manner of the target network function.

The foregoing describes a network function discovery method on a first network function side, and the following provides a network function discovery method on a second network function side.

FIG. 5 is a flowchart of a network function discovery method according to an embodiment of this application. As shown in FIG. 5, the network function discovery method includes the following steps:
Step 501: A second network function sends a first message to a first network function, where the first message is used to request to discover a network function supporting a model training capability, and the model training capability includes a positioning model training capability.
Step 502: The second network function receives a second message from the first network function, where the second message is used to feed back a network function discovery result.

In this embodiment of this application, a second network function sends a first message to a first network function, where the first message is used to request to discover a network function supporting a model training capability, and the model training capability includes a positioning model training capability; and the second network function receives a second message from the first network function, where the second message is used to feed back a network function discovery result. In this way, the network function supporting the positioning model training capability is requested to be discovered, so that a positioning model can participate in a positioning service, thereby improving positioning accuracy.

In some embodiments, the first message includes at least one piece of the following information:
first information indicating that the network function requested to be discovered needs to support the model training capability;
second information indicating a use object of a model trained by the network function requested to be discovered;
third information indicating a use area of the model trained by the network function requested to be discovered;
fourth information indicating a positioning case of the model trained by the network function requested to be discovered;
fifth information indicating an inference manner of the model trained by the network function requested to be discovered;
sixth information indicating an inference result type of the model trained by the network function requested to be discovered;
seventh information indicating an input data type of the model trained by the network function requested to be discovered; and
eighth information indicating a task type of the model trained by the network function requested to be discovered.

In some embodiments, the second message includes either one of the following:
information about a target network function, where the target network function is a network function supporting the model training capability; and
ninth information indicating a discovery failure.

In some embodiments, the second message includes the information about the target network function.

The method further includes:
The second network function sends a fourth message to the target network function, where the fourth message is used to request to obtain a target model, and the target model includes a positioning model.

Optionally, the second network function sends the fourth message to the target network function based on network function information of the target network function.

It should be noted that the positioning model in this embodiment of this application may alternatively be an AI positioning model, a model used for positioning/AI positioning, or the like.

The second network function may further interact with the target network function, and send the fourth message to the target network function, to request to obtain the target model. The fourth message may be understood as a model request message, for example, a message such as Nnwdaf_MLModelProvision_Subscribe or Nnwdaf_MLModelInfo_Request.

In some embodiments, the fourth message includes at least one piece of the following information:
eighteenth information indicating that the target model is requested to be obtained;
nineteenth information indicating a use object of the target model;
twentieth information indicating a use area of the target model;
twenty-first information indicating a positioning case of the target model;
twenty-second information indicating an inference manner of the target model;
twenty-third information indicating an inference result type of the target model;
twenty-fourth information indicating an input data type of the target model; and
twenty-fifth information indicating a task type of the target model.

For example, the target model is a positioning model. The eighteenth information may be understood as indication information for requesting to obtain the positioning model, indicating that the request is used to obtain the positioning model. The fourth message may alternatively be used as indication information for implicitly requesting the positioning model. For example, the target network function may learn, from at least one of a service name or indication information of a positioning task in the fourth message, that the fourth message is used to request the positioning model. The nineteenth information may be understood as a use object supported/allowed by the positioning model requested to be obtained. The twentieth information may be understood as a use area supported/allowed by the positioning model requested to be obtained. The twenty-first information may be understood as a positioning case supported/allowed by the positioning model requested to be obtained. The twenty-second information may be understood as an inference manner supported/allowed by the positioning model requested to be obtained. The twenty-third information may be understood as an inference result type supported/allowed by the positioning model requested to be obtained. The twenty-fourth information may be understood as an input data type supported/allowed by the positioning model requested to be obtained. The twenty-fifth information may be understood as a task type supported/allowed by the positioning model requested to be obtained.

For other information, refer to the second information to the eighth information. To avoid repetition, details are not described again.

In this embodiment, one or more pieces of the foregoing information are carried in the fourth message, so that the network function that the second network function requests to discover can better meet a requirement of the second network function.

In some embodiments, the method further includes:
The second network function receives a fifth message from the target network function, where the fifth message includes related information of the target model.

In some embodiments, the related information of the target model includes at least one of the following:
address information of the target model;
a model file (model file) corresponding to the target model;
identification information (such as a model ID) of the target model; and
related information of a network function storing the target model.

The address information of the target model may be understood as storage address information of the target model, for example, an IP address or a uniform resource locator (Uniform Resource Locator, URL).

The related information of the network function storing the target model may be understood as information about the network function storing the target model, and the network function information may include an FQDN or address information (for example, an IP address or a medium access control (Medium Access Control, MAC) address).

In addition, the related information of the target model may further include indication information of a valid area of the target model, indication information of a valid time of the target model, or the like.

As described above, the second network function may include a network function such as an AMF, an LMF, or an SMF. In an example, when the second network function is an LMF and the target network function is an NWDAF, interaction between the second network function and the target network function may not be direct interaction, but may be performed through forwarding via another network function such as a GMLC. Specifically, the LMF sends the model request message to the NWDAF via the GMLC, and the NWDAF sends model-related information to the LMF via the GMLC.

It should be noted that when the target network function fails to obtain the model, for example, in a case that no model meeting a condition can be provided, or no data meeting a condition is available to train the model, the target network function may send, to the second network function, a message indicating the model obtaining failure, to notify the second network function that the model request fails.

In some embodiments, before the second network function sends the first message to the first network function, the method further includes:
The second network function receives a sixth message from a first device, where the sixth message is used to request to obtain the target model, and the target model includes the positioning model.

The sixth message may be understood as a model request message.

In this embodiment, the second network function neither sends the first message to the first network function as a request initiator, nor sends the first message to the first network function as a model demand side, but sends the first message to the first network function based on the model request of the first device. In this case, the first device may be understood as a request initiator or a model demand side.

In some embodiments, the method further includes:
The second network function sends a seventh message to the first device, where the seventh message includes the related information of the target model.

After the second network function obtains the related information, sent by the target network function, of the target model, the second network function may forward the related information of the target model to the first device. In this way, the first device can obtain the target model based on the related information of the target model, so that the first device can use the target model.

In some embodiments, before the second network function sends the first message to the first network function, the method further includes:
The second network function receives an eighth message from a second device, where the eighth message is used to request to obtain positioning information.

In this embodiment, the second network function may be, for example, an LMF. After receiving the positioning request of the second device, the LMF determines to trigger a model request. In this case, the second network function may be understood as a request initiator or a model demand side.

In some embodiments, the method further includes:
The second network function determines the positioning information based on the target model and positioning-related data in a case that the target model is obtained.

Specifically, the LMF may obtain the target model based on model-related information. The LMF may further interact with a device such as UE to obtain measurement information or other positioning-related data, generate positioning result data based on the obtained target model and positioning-related data, and feed back the positioning result data to the second device, such as the UE or an AF.

The foregoing is the network function discovery method on the second network function side. All related implementations on the first network function side may be applied to the second network function side, while the same technical effects can be achieved. To avoid repetition, details are not described again. The following provides a network function discovery method on a third network function side.

FIG. 6 is a flowchart of a network function discovery method according to an embodiment of this application. As shown in FIG. 6, the network function discovery method includes the following step:
Step 601: A third network function receives a fourth message from a second network function, where the fourth message is used to request to obtain a target model, and the target model includes a positioning model.

In this embodiment of this application, a third network function receives a fourth message from a second network function, where the fourth message is used to request to obtain a target model, and the target model includes a positioning model. In this way, the positioning model is requested to be obtained, so that the positioning model can participate in a positioning service, thereby improving positioning accuracy.

In some embodiments, the fourth message includes at least one piece of the following information:
eighteenth information indicating that the target model is requested to be obtained;
nineteenth information indicating a use object of the target model;
twentieth information indicating a use area of the target model;
twenty-first information indicating a positioning case of the target model;
twenty-second information indicating an inference manner of the target model;
twenty-third information indicating an inference result type of the target model;
twenty-fourth information indicating an input data type of the target model; and
twenty-fifth information indicating a task type of the target model.

In some embodiments, the method further includes:

The third network function sends a fifth message to the second network function based on the fourth message, where the fifth message includes related information of the target model, and the target model is a model obtained by the third network function through pre-training, or a model obtained by the third network function through training based on the fourth message.

After receiving the fourth message, before sending the fifth message, the third network function may perform model selection or model training to obtain a model meeting a condition. Specifically, the third network function selects, based on the received model request message, an existing model meeting the condition. If there is no existing model meeting the condition, the third network function may perform model training based on the model request message to generate a new model meeting the condition.

The model meeting the condition means that information about the model matches information in the model request message. For example, a (supported) use object of the model is the use object of the model in the model request message. For another example, an (applicable) positioning case of the model is the required positioning case in the model request message.

In some embodiments, the related information of the target model includes at least one of the following:
address information of the target model;
a model file corresponding to the target model;
identification information of the target model; and
related information of a network function storing the target model.

In some embodiments, the method further includes:

The third network function sends a third message to a first network function, where the third message is used to request to register related information of the third network function, the third message includes tenth information, the tenth information indicates that the third network function supports a model training capability, and the model training capability includes a positioning model training capability.

In some embodiments, the third message further includes at least one piece of the following information:
eleventh information indicating a use object of a model corresponding to the model training capability;
twelfth information indicating a use area of the model corresponding to the model training capability;
thirteenth information indicating a positioning case of the model corresponding to the model training capability;
fourteenth information indicating an inference manner of the model corresponding to the model training capability;
fifteenth information indicating an inference result type of the model corresponding to the model training capability;
sixteenth information indicating an input data type of the model corresponding to the model training capability; and
seventeenth information indicating a task type of the model corresponding to the model training capability.

The foregoing is the network function discovery method on the third network function side. All related implementations on the first network function side and the second network function side may be applied to the third network function side, while the same technical effects can be achieved. To avoid repetition, details are not described again. The following provides a network function discovery method on a first device side.

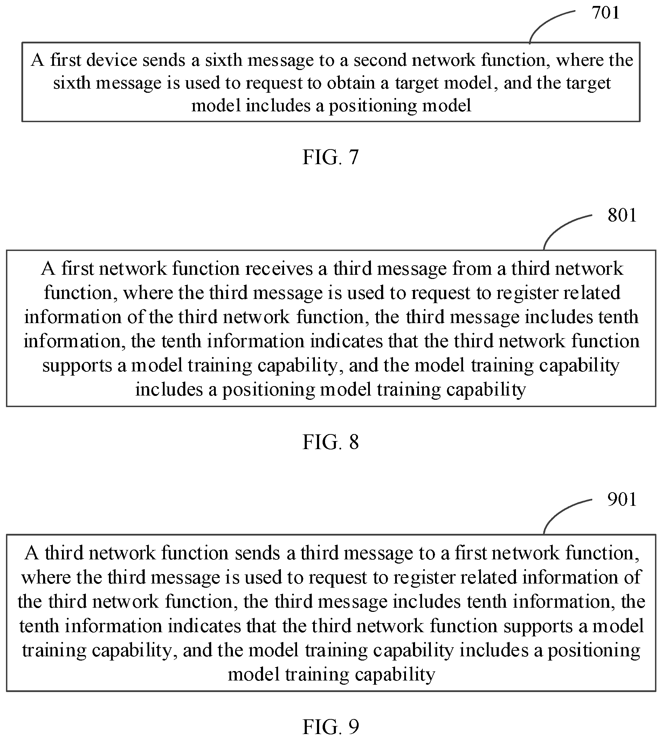

FIG. 7 is a flowchart of a network function discovery method according to an embodiment of this application. As shown in FIG. 7, the network function discovery method includes the following step:
Step 701: A first device sends a sixth message to a second network function, where the sixth message is used to request to obtain a target model, and the target model includes a positioning model.

The first device may include, for example, a device such as UE, a PRU, or a RAN.

In this embodiment of this application, a first device sends a sixth message to a second network function, where the sixth message is used to request to obtain a target model, and the target model includes a positioning model. In this way, the positioning model is requested to be obtained, so that the positioning model can participate in a positioning service, thereby improving positioning accuracy.

In some embodiments, the method further includes:
The first device receives a seventh message from the second network function, where the seventh message includes related information of the target model.

In some embodiments, the related information of the target model includes at least one of the following:
address information of the target model;
a model file corresponding to the target model;
identification information of the target model; and
related information of a network function storing the target model.

The foregoing is the network function discovery method on the first device side. All related implementations on the first network function side, the second network function side, and the third network function side may be applied to the first device side, while the same technical effect can be achieved. To avoid repetition, details are not described again.

Embodiments of this application further provide a separate network function registration method. The following separately describes a network function registration method on a first network function side and a network function registration method on a third network function side.

FIG. 8 is a flowchart of a network function registration method according to an embodiment of this application. As shown in FIG. 8, the network function registration method includes the following step:
Step 801: A first network function receives a third message from a third network function, where the third message is used to request to register related information of the third network function, the third message includes tenth information, the tenth information indicates that the third network function supports a model training capability, and the model training capability includes a positioning model training capability.

The third message may be understood as a registration request message. The third message may carry information such as identification information (for example, an NF instance ID, an FQDN, an NF IP address, or a network function instance identifier), an NF type, or a network function type of the target network function. The third message may further carry network function capability information, for example, the tenth information. The tenth information may be understood as indicating that the network function supports training of a model used for (AI) positioning, or indicating that the network function supports a capability of training a positioning-related model.

After receiving the registration request message from the third network function, the first network function may store the network function registration information or the network function capability information. The first network function may further feed back a registration response message to the third network function. Specifically, after receiving the registration request message, the first network function stores the network function registration information, and sends a response message, for example, an Nnrf_NFManagement_NFRegister response message, to notify the third network function of a registration success.

In this embodiment of this application, a first network function receives a third message from a third network function, where the third message is used to request to register related information of the third network function, the third message includes tenth information, the tenth information indicates that the third network function supports a model training capability, and the model training capability includes a positioning model training capability. In this way, network function information of the third network function supporting the model training capability is requested to be registered, so that another network function or device can discover the third network function to obtain a positioning model to participate in a positioning service, thereby improving positioning accuracy.

In some embodiments, the third message further includes at least one piece of the following information:
eleventh information indicating a use object of a model corresponding to the model training capability;
twelfth information indicating a use area of the model corresponding to the model training capability;
thirteenth information indicating a positioning case of the model corresponding to the model training capability;
fourteenth information indicating an inference manner of the model corresponding to the model training capability;
fifteenth information indicating an inference result type of the model corresponding to the model training capability;
sixteenth information indicating an input data type of the model corresponding to the model training capability; and
seventeenth information indicating a task type of the model corresponding to the model training capability.

FIG. 9 is a flowchart of a network function registration method according to an embodiment of this application. As shown in FIG. 9, the network function registration method includes the following step:
Step 901: A third network function sends a third message to a first network function, where the third message is used to request to register related information of the third network function, the third message includes tenth information, the tenth information indicates that the third network function supports a model training capability, and the model training capability includes a positioning model training capability.

In this embodiment of this application, a third network function sends a third message to a first network function, where the third message is used to request to register related information of the third network function, the third message includes tenth information, the tenth information indicates that the third network function supports a model training capability, and the model training capability includes a positioning model training capability. In this way, the third network function supporting the model training capability requests to register network function information, so that another network function or device can discover the third network function to obtain a positioning model to participate in a positioning service, thereby improving positioning accuracy.

In some embodiments, the third message further includes at least one piece of the following information:
eleventh information indicating a use object of a model corresponding to the model training capability;
twelfth information indicating a use area of the model corresponding to the model training capability;
thirteenth information indicating a positioning case of the model corresponding to the model training capability;
fourteenth information indicating an inference manner of the model corresponding to the model training capability;
fifteenth information indicating an inference result type of the model corresponding to the model training capability;
sixteenth information indicating an input data type of the model corresponding to the model training capability; and
seventeenth information indicating a task type of the model corresponding to the model training capability.

To better understand the technical solutions of this application, the following provides specific embodiments to separately illustrate the network function registration method and the network function discovery method of this application. In addition, it should be noted that for details not described in the method embodiments corresponding to FIG. 4 to FIG. 9, refer to related descriptions of any one of the following embodiments. The related descriptions of any one of the following embodiments are applicable to the method embodiments corresponding to FIG. 4 to FIG. 9. To avoid repetition, details are not described again.

### Embodiment 1: Network function registration procedure

In this embodiment, that the first network function is an NRF/AMF and the third network function is an NWDAF is used as an example to specifically describe a network function registration procedure.

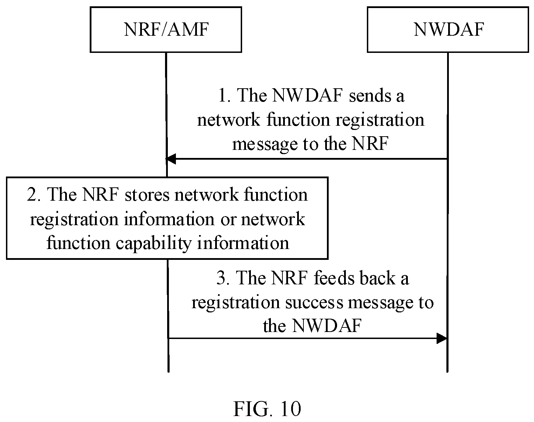

As shown in FIG. 10, the NWDAF represents a model training network function, or may be another network function or device supporting a model training capability; and the NRF represents a network repository function network function, or may be another network function or device having a storage function, such as the AMF. As shown in FIG. 10, the network function registration procedure in this embodiment includes the following steps:

Step 1: The NWDAF sends a request to the NRF to request network function information registration. For example, the NWDAF may send, to the NRF, a network function registration message, such as an Nnrf_NFManagement_NFRegister Request message.

Specifically, when the NWDAF sends the registration message to the NRF, in addition to information such as identification information (for example, an NF instance ID, an FQDN, an NF IP address, or network function instance identification information), an NF type, or a network function type of the NWDAF, network function capability information may be further carried. The network function capability information includes at least one of the following:
an indication of a capability of training a positioning model, indicating that the network function supports training of a model used for (AI) positioning, or supports a capability of training a positioning-related model;
a positioning method applicable to the positioning model, indicating a positioning method supported by the trained positioning model, for example, at least one of the following: an uplink positioning method, a downlink positioning method, a PRS-based positioning method, or an SRS-based positioning method;
a positioning inference manner corresponding to the positioning model, such as direct inference positioning or indirect inference positioning;
a use object of the positioning model, indicating an object allowed to use the positioning model, such as UE, a PRU, a gNB, or an LMF;
an input data type of the positioning model, indicating positioning-related data used for positioning model training, for example, measurement data (such as a CIR, a PDP, a DP, RSRP, an RSRPP, or a RSTD), intermediate feature data (such as a TOA or a path phase), or assistance data (such as an RS configuration);
an output data type of the positioning model, indicating an inference result type of the positioning model, such as an intermediate feature, a location, or location information; and
an indication of a supported positioning task, indicating an identifier of a positioning task supported by the NWDAF, such as an analytics ID for AI positioning (analytics ID = AI positioning); or model function type or task description information, for example, a supported model type, a functionality ID, an analytics ID, or a task type, which is used to describe a function or purpose of the supported model.

Step 2: The NRF stores the network function registration information or the network function capability information.

Step 3: The NRF feeds back a registration success message to the NWDAF.

Specifically, after receiving the registration message, the NRF stores the network function registration information of the NWDAF, and sends a response message (for example, an Nnrf_NFManagement_NFRegister response) to notify the NWDAF of a registration success.

### Embodiment 2: Network function discovery procedure

In this embodiment, that the first network function is an NRF/AMF, the second network function is an AMF/LMF/SMF, the third network function is an NWDAF, and the first device is UE/a gNB/a PRU is used as an example to specifically describe a network function discovery procedure.

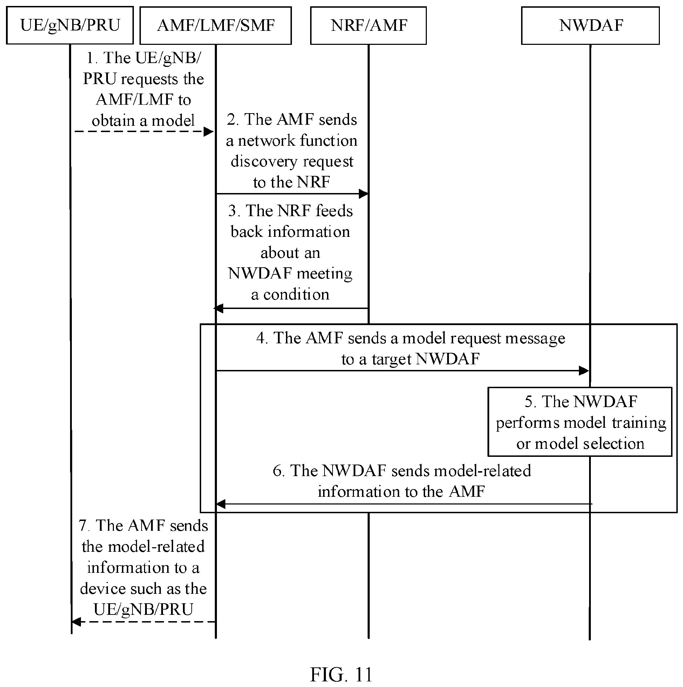

As shown in FIG. 11, the NWDAF represents a model training network function, or may be another network function or device supporting a model training capability; the NRF/AMF represents a network repository function network function, or may be another network function or device having a storage function; the AMF/LMF/SMF represents a network function or device that requests a positioning model in a core network; and the UE/gNB/PRU represents a device that requests a positioning model outside the core network. As shown in FIG. 11, the network function discovery procedure in this embodiment includes the following steps:

Step 1: The UE/gNB/PRU triggers a model request to request the AMF/LMF to obtain a model. Alternatively, after receiving a positioning task request, the LMF may determine to trigger a model request (for details, refer to Embodiment 3). Alternatively, a model request may be triggered in another manner.

Step 2: A device such as the AMF sends a network function discovery request (such as an Nnrf_NFDiscovery_Request service) to the NRF to discover an NWDAF network function meeting a condition. The network function discovery request may carry a network function type (indicating a type of the network function to be discovered, such as the NWDAF network function) and area information (indicating a service range of the network function to be discovered), and further needs to carry at least one of the following:
an indication of a capability of training a positioning model, indicating that the network function to be discovered needs to support the capability of training the positioning model;
a positioning model use object or a target positioning model use object, indicating a (to be supported) use object of the positioning model of the network function to be discovered;
a required positioning method or a target positioning method, indicating a (to be supported) positioning case of the positioning model of the network function to be discovered;
a required positioning inference manner or a target positioning inference manner, indicating a (to be supported) positioning inference manner of the positioning model of the network function to be discovered;
a required inference result type or a target inference result type, indicating a (to be supported) inference result type of the positioning model of the network function to be discovered;
a required input data type or a target input data type, indicating a (to be supported) input data type of the positioning model of the network function to be discovered; and
indication information of a required positioning task, such as an analytics ID for AI positioning or a functionality ID.

It should be noted that when the AMF is a network function that is prepared to perform model discovery and a network function that stores network function capability information, step 2 may be skipped, and the AMF selects a network function meeting a condition.

Step 3: The NRF feeds back information about the NWDAF meeting the condition, such as network function instance identification information (an NF instance ID), address information (an NF IP address), or a network function domain name (an FQDN). For example, an Nnrf_NFDiscovery_Request response message may be used for feedback.

Specifically, the NRF may match the information in the network function discovery request sent by the AMF/LMF/SMF in step 2 against network function registration information, to find at least one NWDAF meeting the condition. Specifically, the NRF/AMF determines, depending on whether the indication information of the capability of training the positioning model matches indication information of a capability of training a positioning model in network function capability information, whether the NWDAF is an NWDAF meeting the condition. For example, if the positioning model use object indication information matches capability information about a use object of a positioning model of the NWDAF, the NWDAF is an NWDAF meeting the condition. Another matching manner is similar thereto, and details are not described herein.

It should be noted that when the discovery of the NRF fails, for example, no NWDAF meeting the condition is found, the NRF may feed back a discovery failure request message to the AMF or the like.

Step 4: The AMF sends a model request message to a target NWDAF to request to obtain a positioning model. The model request message may carry the information in step 2, and the model request message includes, for example, Nnwdaf_MLModelProvision_Subscribe or Nnwdaf_MLModelInfo_Request.

Specifically, the AMF sends the model request message to the NWDAF found in step 2 to step 3, to request the NWDAF to feed back a model meeting a condition. The model request message may carry:
positioning model request indication information, indicating that the request is used to obtain the positioning model, where the indication information may alternatively be an implicit indication, for example, it is learned, in combination with a service name and/or indication information of a positioning task, that the message is used to request the positioning model;
indication information of a required positioning task, such as an analytics ID for AI positioning or a functionality ID;
a model use object or a target model use object, indicating a use object of the requested model;
a required positioning method or a target positioning method, indicating a positioning case of the requested model;
a required output data type or inference result type, a target inference result type, or the like, indicating an inference result type of the requested model; and
a required input data type or a target input data type, indicating an input data type of the requested model.

Step 5: The NWDAF performs model training or model selection to obtain the model meeting the condition.

Step 6: The NWDAF sends model-related information to the AMF, where the model-related information may include a model storage address, address information of a network function that stores the model, or the like.

Step 7: The AMF sends the model-related information to a device such as the UE/gNB/PRU, where the model-related information may include the model storage address, the address information of the network function that stores the model, or the like.

### Embodiment 3: Network function discovery procedure

In this embodiment, that the first network function is an NRF/AMF, the second network function is an LMF, the third network function is an NWDAF, the first device is UE/a RAN, and the second device is an AF is used as an example to specifically describe a network function discovery procedure.

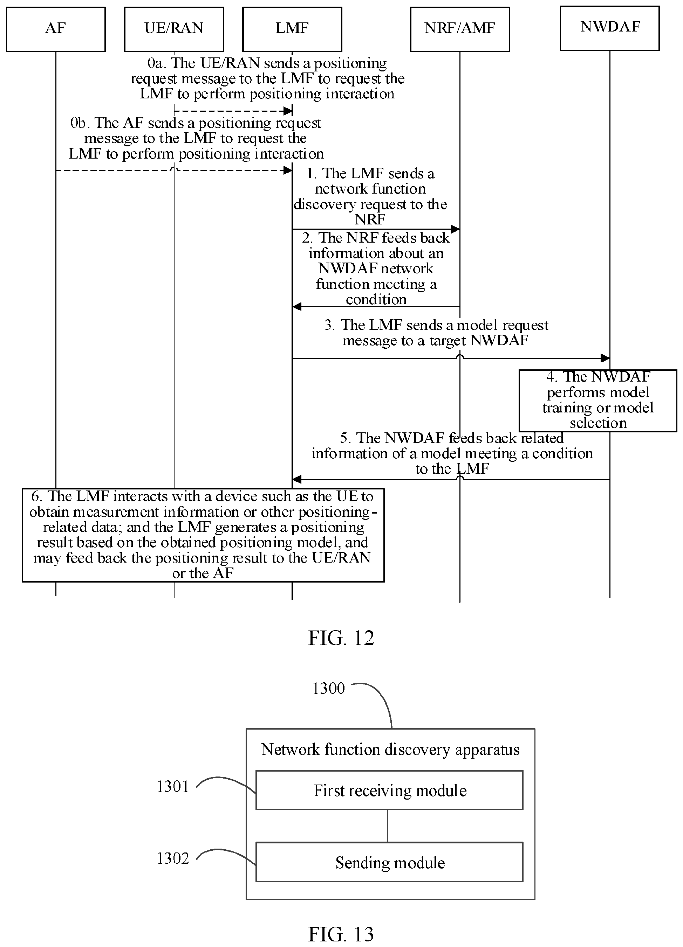

As shown in FIG. 12, the NWDAF represents a model training network function, or may be another network function or device supporting a model training capability; the NRF/AMF represents a network repository function network function, or may be another network function or device having a storage function; the AMF represents a network function or device that requests a positioning model in a core network; and the UE/RAN (or the AF) represents a device that requests positioning outside the core network. As shown in FIG. 12, the network function discovery procedure in this embodiment includes the following steps:
Step 0a (or 0b): The UE/RAN (or the AF) sends a positioning request message to the LMF to request the LMF to perform positioning interaction. It should be noted that the AF herein represents an application network function, or may be a third-party network function. In addition, a device that performs step 0b may alternatively be a network function inside the core network, such as an NWDAF.
Step 1: The LMF sends a network function discovery request to the NRF to discover an NWDAF meeting a condition.
Step 2: The NRF feeds back information about the NWDAF network function meeting the condition.
Step 3: The LMF sends a model request message to a target NWDAF to request to obtain a positioning model. The model request message includes, for example, Nnwdaf_MLModelProvision_Subscribe or Nnwdaf_MLModelInfo_Request.

Specifically, the LMF sends the model request message to the NWDAF found in step 1 to step 2, to request the NWDAF to feed back a model meeting a condition. The model request message may carry:
positioning model request indication information, indicating that the request is used to obtain the positioning model, where the indication information may alternatively be an implicit indication, for example, it is learned, in combination with a service name and/or indication information of a positioning task, that the message is used to request a positioning model;
indication information of a required positioning task, such as an analytics ID for AI positioning or a functionality ID;
a model use object or a target model use object, indicating a use object of the requested model;
a required positioning method or a target positioning method, indicating a positioning case of the requested model;
a required output data type or inference result type, a target inference result type, or the like, indicating an inference result type of the requested model; and
a required input data type or a target input data type, indicating an input data type of the requested model.

It should be noted that the interaction between the LMF and the NWDAF may not be direct interaction, but indirect interaction performed through forwarding via a GMLC. Specifically, the LMF sends the model request message to the NWDAF via the GMLC, and the NWDAF sends model-related information to the LMF via the GMLC.

Step 4: The NWDAF performs model training or model selection to obtain the model meeting the condition.

Specifically, the NWDAF obtains, based on the model request message received in step 3, the model meeting the condition, which may generate a new model through model training, or select an existing model meeting the condition. The model meeting the condition means that information about the model matches information in the model request message. For example, a use object of the model is the model use object in the request message; an (applicable) positioning case of the model is the required positioning case in the request message. Another matching manner is similar thereto, and details are not described herein.

Step 5: The NWDAF feeds back related information of the model meeting the condition to the LMF. The model-related information may be a model storage address (an IP address or a URL), a model file (model file), information about a network function storing the model, a model ID, or the like. The network function information includes an FQDN, address information (such as an IP address or a MAC address), or the like. In addition, other model-related information such as information about a valid area or a valid time of the model may also be carried.

It should be noted that when the NWDAF fails to obtain the model, for example, in a case that no model meeting a condition can be provided, or no data meeting a condition is available to train the model, the NWDAF may send, to the LMF, a message indicating the model obtaining failure, to notify the LMF that the model request fails.

Step 6: The LMF interacts with a device such as the UE to obtain measurement information or other positioning-related data; and the LMF generates a positioning result based on the obtained positioning model, and may feed back the positioning result to the requester in step 0a (or step 0b), such as the UE (or the AF).

In conclusion, embodiments of this application provide a network function registration method for a positioning model training capability. A network function (for example, a model training network function such as an NWDAF) may send information related to the positioning model training capability of the network function to another network function (for example, an NRF or an AMF), to notify the another network function of information such as the network function supporting the positioning model training capability, so that the another network function (for example, the AMF, an LMF, or an SMF) can find, through search, selection, or the like, the another network function supporting the positioning model training capability, and subsequently performs further interaction to obtain a positioning model or the like.

The network function discovery method according to embodiments of this application may be performed by the network function discovery apparatus. The network function registration method according to embodiments of this application may be performed by the network function registration apparatus. In embodiments of this application, the network function discovery apparatus and the network function registration apparatus according to embodiments of this application are sequentially described by using examples that the network function discovery apparatus executes the network function discovery method and the network function registration apparatus executes the network function registration method.

FIG. 13 is a structural diagram of a network function discovery apparatus according to an embodiment of this application. The network function discovery apparatus may be applied to a first network function. As shown in FIG. 13, the network function discovery apparatus 1300 includes:
a first receiving module 1301, configured to receive a first message from a second network function, where the first message is used to request to discover a network function supporting a model training capability, and the model training capability includes a positioning model training capability; and
a sending module 1302, configured to send a second message to the second network function, where the second message is used to feed back a network function discovery result.

Optionally, the first message includes at least one piece of the following information:
first information indicating that the network function requested to be discovered needs to support the model training capability;
second information indicating a use object of a model trained by the network function requested to be discovered;
third information indicating a use area of the model trained by the network function requested to be discovered;
fourth information indicating a positioning case of the model trained by the network function requested to be discovered;
fifth information indicating an inference manner of the model trained by the network function requested to be discovered;
sixth information indicating an inference result type of the model trained by the network function requested to be discovered;
seventh information indicating an input data type of the model trained by the network function requested to be discovered; and
eighth information indicating a task type of the model trained by the network function requested to be discovered.

Optionally, the second message includes either one of the following:
information about a target network function, where the target network function is a network function supporting the model training capability; and
ninth information indicating a discovery failure.

Optionally, the network function discovery apparatus 1300 further includes:
a processing module, configured to determine the target network function based on the first message, where information about the target network function matches information in the first message.

Optionally, the processing module is specifically configured to perform at least one of the following:
determine the target network function based on the first information in a case that the first message includes the first information and the first information indicates that the network function requested to be discovered needs to support the model training capability, where the target network function is a network function supporting the model training capability;
determine the target network function based on the second information in a case that the first message includes the second information and the second information indicates the use object of the model trained by the network function requested to be discovered, where a use object of a model trained by the target network function matches the second information;
determine the target network function based on the third information in a case that the first message includes the third information and the third information indicates the use area of the model trained by the network function requested to be discovered, where a use area of the model trained by the target network function matches the third information;
determine the target network function based on the fourth information in a case that the first message includes the fourth information and the fourth information indicates the positioning case of the model trained by the network function requested to be discovered, where a positioning case of the model trained by the target network function matches the fourth information;
determine the target network function based on the fifth information in a case that the first message includes the fifth information and the fifth information indicates the inference manner of the model trained by the network function requested to be discovered, where a model inference manner of the model trained by the target network function matches the fifth information;
determine the target network function based on the sixth information in a case that the first message includes the sixth information and the sixth information indicates the inference result type of the model trained by the network function requested to be discovered, where an inference result type of the model trained by the target network function matches the sixth information;
determine the target network function based on the seventh information in a case that the first message includes the seventh information and the seventh information indicates the input data type of the model trained by the network function requested to be discovered, where an input data type of the model trained by the target network function matches the seventh information; and
determine the target network function based on the eighth information in a case that the first message includes the eighth information and the eighth information indicates the task type of the model trained by the network function requested to be discovered, where a task type of the model trained by the target network function matches the eighth information.

Optionally, the network function discovery apparatus 1300 further includes:
a second receiving module, configured to receive a third message from the target network function, where the third message is used to request to register related information of the target network function.

Optionally, the third message includes at least one piece of the following information:
tenth information indicating that the target network function supports the model training capability, where the model training capability includes the positioning model training capability;
eleventh information indicating a use object of a model corresponding to the model training capability;
twelfth information indicating a use area of the model corresponding to the model training capability;
thirteenth information indicating a positioning case of the model corresponding to the model training capability;
fourteenth information indicating an inference manner of the model corresponding to the model training capability;
fifteenth information indicating an inference result type of the model corresponding to the model training capability;
sixteenth information indicating an input data type of the model corresponding to the model training capability; and
seventeenth information indicating a task type of the model corresponding to the model training capability.

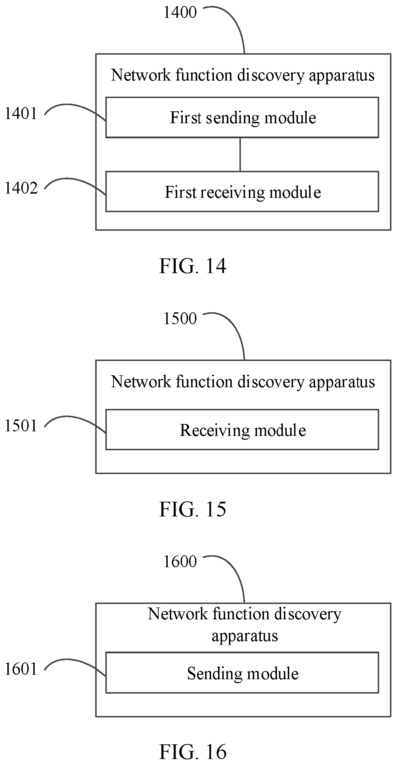

FIG. 14 is a structural diagram of a network function discovery apparatus according to an embodiment of this application. The network function discovery apparatus may be applied to a second network function. As shown in FIG. 14, the network function discovery apparatus 1400 includes:
a first sending module 1401, configured to send a first message to a first network function, where the first message is used to request to discover a network function supporting a model training capability, and the model training capability includes a positioning model training capability; and
a first receiving module 1402, configured to receive a second message from the first network function, where the second message is used to feed back a network function discovery result.

Optionally, the first message includes at least one piece of the following information:
first information indicating that the network function requested to be discovered needs to support the model training capability;
second information indicating a use object of a model trained by the network function requested to be discovered;
third information indicating a use area of the model trained by the network function requested to be discovered;
fourth information indicating a positioning case of the model trained by the network function requested to be discovered;
fifth information indicating an inference manner of the model trained by the network function requested to be discovered;
sixth information indicating an inference result type of the model trained by the network function requested to be discovered;
seventh information indicating an input data type of the model trained by the network function requested to be discovered; and
eighth information indicating a task type of the model trained by the network function requested to be discovered.

Optionally, the second message includes either one of the following:
information about a target network function, where the target network function is a network function supporting the model training capability; and
ninth information indicating a discovery failure.

Optionally, the second message includes the information about the target network function, and
the network function discovery apparatus 1400 further includes:
a second sending module, configured to send a fourth message to the target network function, where the fourth message is used to request to obtain a target model, and the target model includes a positioning model.

Optionally, the fourth message includes at least one piece of the following information:
eighteenth information indicating that the target model is requested to be obtained;
nineteenth information indicating a use object of the target model;
twentieth information indicating a use area of the target model;
twenty-first information indicating a positioning case of the target model;
twenty-second information indicating an inference manner of the target model;
twenty-third information indicating an inference result type of the target model;
twenty-fourth information indicating an input data type of the target model; and
twenty-fifth information indicating a task type of the target model.

Optionally, the network function discovery apparatus 1400 further includes:
a second receiving module, configured to receive a fifth message from the target network function, where the fifth message includes related information of the target model.

Optionally, the related information of the target model includes at least one of the following:
address information of the target model;
a model file corresponding to the target model;
identification information of the target model; and
related information of a network function storing the target model.

Optionally, the network function discovery apparatus 1400 further includes:
a third receiving module, configured to receive a sixth message from a first device, where the sixth message is used to request to obtain the target model, and the target model includes the positioning model.

Optionally, the network function discovery apparatus 1400 further includes:
a third sending module, configured to send a seventh message to the first device, where the seventh message includes the related information of the target model.

Optionally, the network function discovery apparatus 1400 further includes:
a fourth receiving module, configured to receive an eighth message from a second device, where the eighth message is used to request to obtain positioning information.

Optionally, the network function discovery apparatus 1400 further includes:
a processing module, configured to determine the positioning information based on the target model and positioning-related data in a case that the target model is obtained.

FIG. 15 is a structural diagram of a network function discovery apparatus according to an embodiment of this application. The network function discovery apparatus may be applied to a third network function. As shown in FIG. 15, the network function discovery apparatus 1500 includes:
a receiving module 1501, configured to receive a fourth message from a second network function, where the fourth message is used to request to obtain a target model, and the target model includes a positioning model.

Optionally, the fourth message includes at least one piece of the following information:
eighteenth information indicating that the target model is requested to be obtained;
nineteenth information indicating a use object of the target model;
twentieth information indicating a use area of the target model;
twenty-first information indicating a positioning case of the target model;
twenty-second information indicating an inference manner of the target model;
twenty-third information indicating an inference result type of the target model;
twenty-fourth information indicating an input data type of the target model; and
twenty-fifth information indicating a task type of the target model.

Optionally, the network function discovery apparatus 1500 further includes:
a first sending module, configured to send a fifth message to the second network function based on the fourth message, where the fifth message includes related information of the target model, and the target model is a model obtained by the third network function through pre-training, or a model obtained by the third network function through training based on the fourth message.

Optionally, the related information of the target model includes at least one of the following:
address information of the target model;
a model file corresponding to the target model;
identification information of the target model; and
related information of a network function storing the target model.

Optionally, the network function discovery apparatus 1500 further includes:
a second sending module, configured to send a third message to a first network function, where the third message is used to request to register related information of the third network function, the third message includes tenth information, the tenth information indicates that the third network function supports a model training capability, and the model training capability includes a positioning model training capability.

Optionally, the third message further includes at least one piece of the following information:
eleventh information indicating a use object of a model corresponding to the model training capability;
twelfth information indicating a use area of the model corresponding to the model training capability;
thirteenth information indicating a positioning case of the model corresponding to the model training capability;
fourteenth information indicating an inference manner of the model corresponding to the model training capability;
fifteenth information indicating an inference result type of the model corresponding to the model training capability;
sixteenth information indicating an input data type of the model corresponding to the model training capability; and
seventeenth information indicating a task type of the model corresponding to the model training capability.

FIG. 16 is a structural diagram of a network function discovery apparatus according to an embodiment of this application. The network function discovery apparatus may be applied to a first device. As shown in FIG. 16, the network function discovery apparatus 1600 includes:
a sending module 1601, configured to send a sixth message to a second network function, where the sixth message is used to request to obtain a target model, and the target model includes a positioning model.

Optionally, the network function discovery apparatus 1600 further includes:
a receiving module, configured to receive a seventh message from the second network function, where the seventh message includes related information of the target model.

Optionally, the related information of the target model includes at least one of the following:
address information of the target model;
a model file corresponding to the target model;
identification information of the target model; and
related information of a network function storing the target model.

The network function discovery apparatus in embodiments of this application may be an electronic device, for example, an electronic device having an operating system, or may be a component in an electronic device, for example, an integrated circuit or a chip. The electronic device may be a terminal, or may be another device than a terminal. For example, the terminal may include but is not limited to the foregoing listed terminal types. The another device may be a server, a network attached storage (Network Attached Storage, NAS), or the like. This is not specifically limited in embodiments of this application.

The network function discovery apparatus provided in embodiments of this application can implement processes implemented in the method embodiments of FIG. 4 to FIG. 7, while the same technical effects can be achieved. To avoid repetition, details are not described herein again.

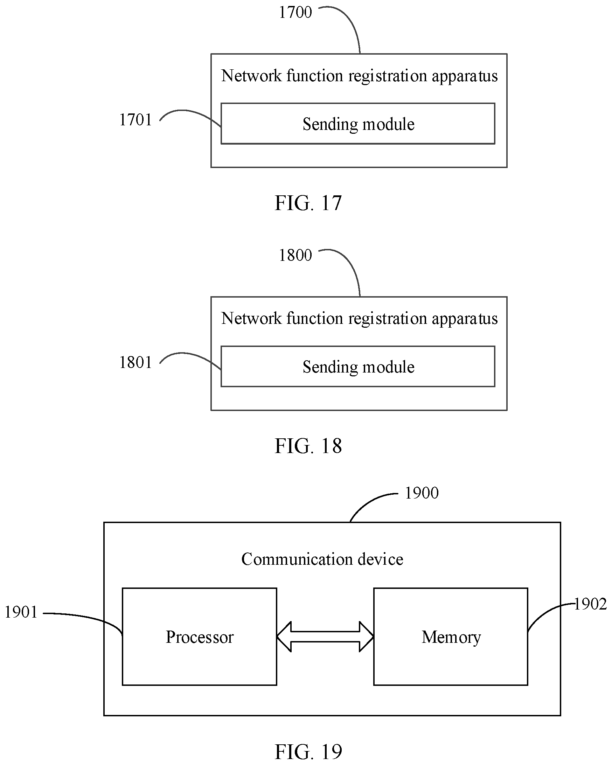

FIG. 17 is a structural diagram of a network function registration apparatus according to an embodiment of this application. The network function registration apparatus may be applied to a first network function. As shown in FIG. 17, the network function registration apparatus 1700 includes:
a receiving module 1701, configured to receive a third message from a third network function, where the third message is used to request to register related information of the third network function, the third message includes tenth information, the tenth information indicates that the third network function supports a model training capability, and the model training capability includes a positioning model training capability.

Optionally, the third message further includes at least one piece of the following information:
eleventh information indicating a use object of a model corresponding to the model training capability;
twelfth information indicating a use area of the model corresponding to the model training capability;
thirteenth information indicating a positioning case of the model corresponding to the model training capability;
fourteenth information indicating an inference manner of the model corresponding to the model training capability;
fifteenth information indicating an inference result type of the model corresponding to the model training capability;
sixteenth information indicating an input data type of the model corresponding to the model training capability; and
seventeenth information indicating a task type of the model corresponding to the model training capability.

FIG. 18 is a structural diagram of a network function registration apparatus according to an embodiment of this application. The network function registration apparatus may be applied to a third network function. As shown in FIG. 18, the network function registration apparatus 1800 includes:
a sending module 1801, configured to send a third message to a first network function, where the third message is used to request to register related information of the third network function, the third message includes tenth information, the tenth information indicates that the third network function supports a model training capability, and the model training capability includes a positioning model training capability.

Optionally, the third message further includes at least one piece of the following information:
eleventh information indicating a use object of a model corresponding to the model training capability;
twelfth information indicating a use area of the model corresponding to the model training capability;
thirteenth information indicating a positioning case of the model corresponding to the model training capability;
fourteenth information indicating an inference manner of the model corresponding to the model training capability;
fifteenth information indicating an inference result type of the model corresponding to the model training capability;
sixteenth information indicating an input data type of the model corresponding to the model training capability; and
seventeenth information indicating a task type of the model corresponding to the model training capability.

The network function registration apparatus in embodiments of this application may be an electronic device, for example, an electronic device having an operating system, or may be a component in an electronic device, for example, an integrated circuit or a chip. The electronic device may be a terminal, or may be another device than a terminal. For example, the terminal may include but is not limited to the foregoing listed terminal types. The another device may be a server, a network attached storage (Network Attached Storage, NAS), or the like. This is not specifically limited in embodiments of this application.

The network function registration apparatus provided in embodiments of this application can implement processes implemented in the method embodiments of FIG. 8 to FIG. 9, while the same technical effects can be achieved. To avoid repetition, details are not described herein again.

It should be noted that the processing module in the network function registration apparatus provided in FIG. 13 may be embedded in a hardware form in or independent of a processor. Correspondingly, the processing module in the network function registration apparatus provided in FIG. 14 may be embedded in a hardware form in or independent of a processor.

As shown in FIG. 19, an embodiment of this application further provides a communication device 1900, including a processor 1901 and a memory 1902. The memory 1902 stores a program or instructions capable of running on the processor 1901, and the program or the instructions are executed by the processor 1901 to implement steps in the network function discovery method embodiment or the network function registration method embodiment, while the same technical effects can be achieved. To avoid repetition, details are not described herein again.

An embodiment of this application further provides a communication device, including a processor and a communication interface. The communication interface is coupled to the processor, and the processor is configured to run a program or instructions to implement steps of the method embodiment shown in FIG. 4, FIG. 5, FIG. 6, FIG. 7, FIG. 8, or FIG. 9, while the same technical effects can be achieved.

In this embodiment of this application, the communication device may include a terminal or a network side device.

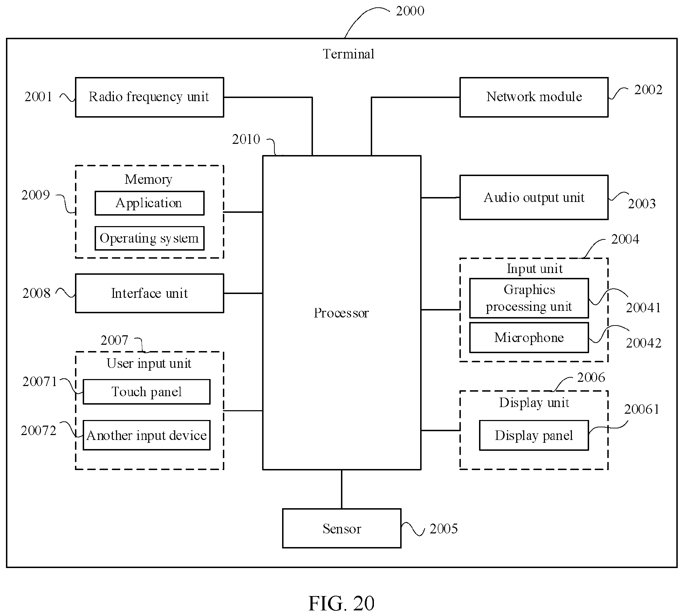

Specifically, FIG. 20 is a schematic diagram of a hardware structure of a terminal for implementing an embodiment of this application.

The terminal 2000 includes but is not limited to at least some components of a radio frequency unit 2001, a network module 2002, an audio output unit 2003, an input unit 2004, a sensor 2005, a display unit 2006, a user input unit 2007, an interface unit 2008, a memory 2009, a processor 2010, and the like.

A person skilled in the art may understand that the terminal 2000 may further include a power supply (for example, a battery) that supplies power to the components. The power supply may be logically connected to the processor 2010 through a power management system, to implement functions such as charging management, discharging management, and power consumption management through the power management system. The terminal structure shown in FIG. 20 does not constitute a limitation on the terminal. The terminal may include more or fewer components than those shown in the figure, or combine some components, or have different component arrangements. Details are not described herein.

It should be understood that in this embodiment of this application, the input unit 2004 may include a graphics processing unit (Graphics Processing Unit, GPU) 20041 and a microphone 20042, and the graphics processing unit 20041 processes image data of a still picture or a video obtained by an image capture apparatus (for example, a camera) in a video capture mode or an image capture mode. The display unit 2006 may include a display panel 20061, and the display panel 20061 may be configured in a form of a liquid crystal display, an organic light-emitting diode, or the like. The user input unit 2007 includes at least one of a touch panel 20071 and another input device 20072. The touch panel 20071 is also referred to as a touchscreen. The touch panel 20071 may include two parts: a touch detection apparatus and a touch controller. The another input device 20072 may include but is not limited to a physical keyboard, a function key (such as a volume control key or an on/off key), a trackball, a mouse, and a joystick. Details are not described herein.

In this embodiment of this application, after receiving downlink data from a network side device, the radio frequency unit 2001 may transmit the downlink data to the processor 2010 for processing. In addition, the radio frequency unit 2001 may send uplink data to the network side device. Generally, the radio frequency unit 2001 includes but is not limited to an antenna, an amplifier, a transceiver, a coupler, a low-noise amplifier, a duplexer, and the like.

The memory 2009 may be configured to store a software program or instructions and various types of data. The memory 2009 may mainly include a first storage area for storing a program or instructions and a second storage area for storing data. The first storage area may store an operating system, an application or instructions required by at least one function (for example, a sound playback function or an image playback function), and the like. In addition, the memory 2009 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), or a direct rambus random access memory (Direct Rambus RAM, DRRAM). The memory 2009 in this embodiment of this application includes but is not limited to these memories and any other suitable type of memory.

The processor 2010 may include one or more processing units. Optionally, the processor 2010 integrates an application processor and a modem processor. The application processor mainly processes operations related to an operating system, user interfaces, applications, and the like. The modem processor, for example, a baseband processor, mainly processes wireless communication signals. It may be understood that the modem processor may not be integrated into the processor 2010.

The radio frequency unit 2001 is configured to:
send a sixth message to a second network function, where the sixth message is used to request to obtain a target model, and the target model includes a positioning model.

Optionally, the radio frequency unit 2001 is further configured to:
receive a seventh message from the second network function, where the seventh message includes related information of the target model.

Optionally, the related information of the target model includes at least one of the following:
address information of the target model;
a model file corresponding to the target model;
identification information of the target model; and
related information of a network function storing the target model.

In conclusion, in this embodiment of this application, a positioning model may be requested to be obtained. In this way, the positioning model can participate in a positioning service, thereby improving positioning accuracy.

An embodiment of this application further provides an access network device, including a processor and a communication interface. The communication interface is coupled to the processor, and the processor is configured to run a program or instructions to implement steps of the method embodiment shown in FIG. 7. The access network device embodiment corresponds to the first device side method embodiment. Each implementation process and manner of the first device side method embodiment are applicable to the access network device embodiment, while the same technical effects can be achieved.

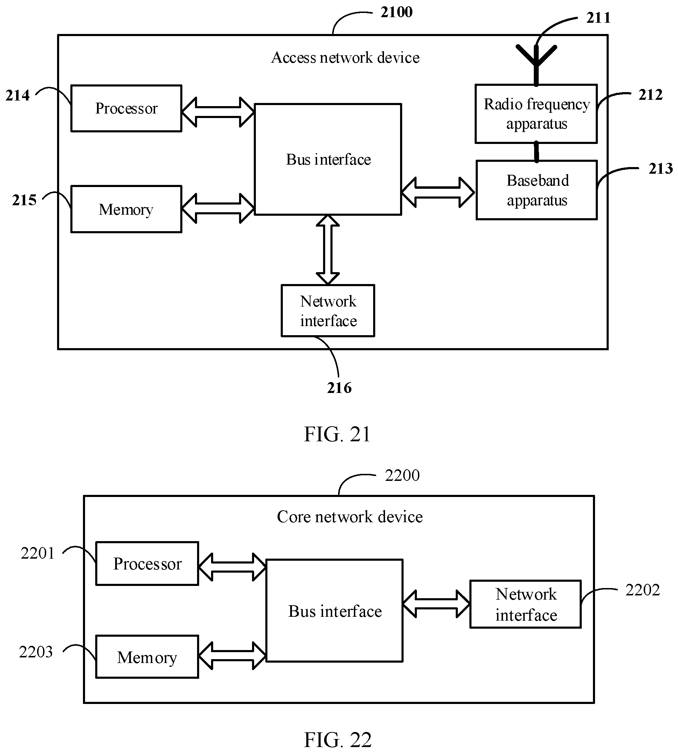

Specifically, an embodiment of this application further provides an access network device. As shown in FIG. 21, the access network device 2100 includes an antenna 211, a radio frequency apparatus 212, a baseband apparatus 213, a processor 214, and a memory 215. The antenna 211 is connected to the radio frequency apparatus 212. In an uplink direction, the radio frequency apparatus 212 receives information through the antenna 211, and sends the received information to the baseband apparatus 213 for processing. In a downlink direction, the baseband apparatus 213 processes to-be-sent information, and sends the processed information to the radio frequency apparatus 212. After processing the received information, the radio frequency apparatus 212 sends the processed information through the antenna 211.

The method performed by the access network device in the foregoing embodiment may be implemented in the baseband apparatus 213, and the baseband apparatus 213 includes a baseband processor.

For example, the baseband apparatus 213 may include at least one baseband board. A plurality of chips are disposed on the baseband board. As shown in FIG. 21, one of the chips is, for example, the baseband processor, and is connected to the memory 215 through a bus interface, to invoke a program in the memory 215 to perform network device operations shown in the foregoing method embodiment.

The access network device may further include a network interface 216. The interface is, for example, a common public radio interface (Common Public Radio Interface, CPRI).

Specifically, the access network device 2100 in this embodiment of this application further includes instructions or a program stored in the memory 215 and capable of running on the processor 214, and the processor 214 invokes the instructions or the program stored in the memory 215 to perform the method performed by the modules shown in FIG. 16, while the same technical effects can be achieved. To avoid repetition, details are not described herein again.

An embodiment of this application further provides a core network device. As shown in FIG. 22, the core network device 2200 includes a processor 2201, a network interface 2202, and a memory 2203. The network interface 2202 is, for example, a common public radio interface (common public radio interface, CPRI).

Specifically, the core network device 2200 in this embodiment of this application further includes instructions or a program stored in the memory 2203 and capable of running on the processor 2201, and the processor 2201 invokes the instructions or the program stored in the memory 2203 to perform the method performed by the modules shown in FIG. 13, FIG. 14, or FIG. 15, while the same technical effects can be achieved. To avoid repetition, details are not described herein again.

An embodiment of this application further provides a readable storage medium. The readable storage medium stores a program or instructions, and the program or the instructions are executed by a processor to implement processes in the network function discovery method embodiment or the network function registration method embodiment, while the same technical effects can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface, the communication interface is coupled to the processor, and the processor is configured to run a program or instructions to implement processes in the network function discovery method embodiment or the network function registration method embodiment, while the same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium, and the computer program/program product is executed by at least one processor to implement processes in the network function discovery method embodiment or the network function registration method embodiment, while the same technical effects can be achieved. To avoid repetition, details are not described herein again.

An embodiment of this application further provides a communication system, including a first network function and a second network function. The first network function may be configured to perform steps performed by the first network function in the network function discovery method, and the second network function may be configured to perform steps performed by the second network function in the network function discovery method.

In an implementation, the communication system further includes a third network function, and the third network function may be configured to perform steps performed by the third network function in the network function discovery method.

In another implementation, the communication system further includes a first device, and the first device may be configured to perform steps performed by the first device in the network function discovery method.

An embodiment of this application further provides a communication system, including a first network function and a third network function. The first network function may be configured to perform steps performed by the first network function in the network function registration method, and the third network function may be configured to perform steps performed by the third network function in the network function registration method.

It should be noted that in this specification, the term "comprise", "include", or any of their variants is intended to cover a non-exclusive inclusion, so that a process, method, article, or apparatus that includes a series of elements not only includes those elements but also includes other elements that are not expressly listed, or further includes elements inherent to the process, method, article, or apparatus. Without more limitations, an element preceded by "includes a/an ..." does not preclude the existence of additional identical elements in the process, method, article, or apparatus that includes the element. In addition, it should be noted that the scope of the methods and apparatuses in embodiments of this application is not limited to performing functions in the sequence shown or discussed, but may further include performing functions in a basically simultaneous manner or in a reverse sequence based on related functions. For example, the described methods may be performed in an order different from the described order, and various steps may be added, omitted, or combined. In addition, features described with reference to some examples may be combined in other examples.

From the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc), and includes several instructions for instructing a terminal or a network side device to perform the method described in embodiments of this application.

Embodiments of this application have been described above with reference to the accompanying drawings, but this application is not limited to the specific embodiments, and the specific embodiments are merely examples rather than limitative. A person of ordinary skill in the art may make various forms of implementations under the teaching of this application without departing from the essence of this application and the protection scope of the claims, and such implementations shall all fall within the protection scope of this application.

## Claims

1. A network function discovery method, comprising:
receiving, by a first network function, a first message from a second network function, wherein the first message is used to request to discover a network function supporting a model training capability, and the model training capability comprises a positioning model training capability; and
sending, by the first network function, a second message to the second network function, wherein the second message is used to feed back a network function discovery result.

2. The method according to claim 1, wherein the first message comprises at least one piece of the following information:
first information indicating that the network function requested to be discovered needs to support the model training capability;
second information indicating a use object of a model trained by the network function requested to be discovered;
third information indicating a use area of the model trained by the network function requested to be discovered;
fourth information indicating a positioning case of the model trained by the network function requested to be discovered;
fifth information indicating an inference manner of the model trained by the network function requested to be discovered;
sixth information indicating an inference result type of the model trained by the network function requested to be discovered;
seventh information indicating an input data type of the model trained by the network function requested to be discovered; and
eighth information indicating a task type of the model trained by the network function requested to be discovered.

3. The method according to claim 1 or 2, wherein the second message comprises either one of the following:
information about a target network function, wherein the target network function is a network function supporting the model training capability; and
ninth information indicating a discovery failure.

4. The method according to any one of claims 1 to 3, wherein the method further comprises:
determining, by the first network function, the target network function based on the first message, wherein information about the target network function matches information in the first message.

5. The method according to claim 4, wherein the determining, by the first network function, the target network function based on the first message comprises at least one of the following:
determining, by the first network function, the target network function based on the first information, wherein the first message comprises the first information, the first information indicates that the network function requested to be discovered needs to support the model training capability, and the target network function is a network function supporting the model training capability;
determining, by the first network function, the target network function based on the second information, wherein the first message comprises the second information, the second information indicates the use object of the model trained by the network function requested to be discovered, and a use object of a model trained by the target network function matches the second information;
determining, by the first network function, the target network function based on the third information, wherein the first message comprises the third information, the third information indicates the use area of the model trained by the network function requested to be discovered, and a use area of the model trained by the target network function matches the third information;
determining, by the first network function, the target network function based on the fourth information, wherein the first message comprises the fourth information, the fourth information indicates the positioning case of the model trained by the network function requested to be discovered, and a positioning case of the model trained by the target network function matches the fourth information;
determining, by the first network function, the target network function based on the fifth information, wherein the first message comprises the fifth information, the fifth information indicates the inference manner of the model trained by the network function requested to be discovered, and a model inference manner of the model trained by the target network function matches the fifth information;
determining, by the first network function, the target network function based on the sixth information, wherein the first message comprises the sixth information, the sixth information indicates the inference result type of the model trained by the network function requested to be discovered, and an inference result type of the model trained by the target network function matches the sixth information;
determining, by the first network function, the target network function based on the seventh information, wherein the first message comprises the seventh information, the seventh information indicates the input data type of the model trained by the network function requested to be discovered, and an input data type of the model trained by the target network function matches the seventh information; and
determining, by the first network function, the target network function based on the eighth information, wherein the first message comprises the eighth information, the eighth information indicates the task type of the model trained by the network function requested to be discovered, and a task type of the model trained by the target network function matches the eighth information.

6. The method according to any one of claims 3 to 5, wherein the method further comprises:
receiving, by the first network function, a third message from the target network function, wherein the third message is used to request to register related information of the target network function.

7. The method according to claim 6, wherein the third message comprises at least one piece of the following information:
tenth information indicating that the target network function supports the model training capability, wherein the model training capability comprises the positioning model training capability;
eleventh information indicating a use object of a model corresponding to the model training capability;
twelfth information indicating a use area of the model corresponding to the model training capability;
thirteenth information indicating a positioning case of the model corresponding to the model training capability;
fourteenth information indicating an inference manner of the model corresponding to the model training capability;
fifteenth information indicating an inference result type of the model corresponding to the model training capability;
sixteenth information indicating an input data type of the model corresponding to the model training capability; and
seventeenth information indicating a task type of the model corresponding to the model training capability.

8. A network function discovery method, comprising:
sending, by a second network function, a first message to a first network function, wherein the first message is used to request to discover a network function supporting a model training capability, and the model training capability comprises a positioning model training capability; and
receiving, by the second network function, a second message from the first network function, wherein the second message is used to feed back a network function discovery result.

9. The method according to claim 8, wherein the first message comprises at least one piece of the following information:
first information indicating that the network function requested to be discovered needs to support the model training capability;
second information indicating a use object of a model trained by the network function requested to be discovered;
third information indicating a use area of the model trained by the network function requested to be discovered;
fourth information indicating a positioning case of the model trained by the network function requested to be discovered;
fifth information indicating an inference manner of the model trained by the network function requested to be discovered;
sixth information indicating an inference result type of the model trained by the network function requested to be discovered;
seventh information indicating an input data type of the model trained by the network function requested to be discovered; and
eighth information indicating a task type of the model trained by the network function requested to be discovered.

10. The method according to claim 8 or 9, wherein the second message comprises either one of the following:
information about a target network function, wherein the target network function is a network function supporting the model training capability; and
ninth information indicating a discovery failure.

11. The method according to claim 10, wherein the second message comprises the information about the target network function, and
the method further comprises:
sending, by the second network function, a fourth message to the target network function, wherein the fourth message is used to request to obtain a target model, and the target model comprises a positioning model.

12. The method according to claim 11, wherein the fourth message comprises at least one piece of the following information:
eighteenth information indicating that the target model is requested to be obtained;
nineteenth information indicating a use object of the target model;
twentieth information indicating a use area of the target model;
twenty-first information indicating a positioning case of the target model;
twenty-second information indicating an inference manner of the target model;
twenty-third information indicating an inference result type of the target model;
twenty-fourth information indicating an input data type of the target model; and
twenty-fifth information indicating a task type of the target model.

13. The method according to claim 11 or 12, wherein the method further comprises:
receiving, by the second network function, a fifth message from the target network function, wherein the fifth message comprises related information of the target model.

14. The method according to claim 13, wherein the related information of the target model comprises at least one of the following:
address information of the target model;
a model file corresponding to the target model;
identification information of the target model; and
related information of a network function storing the target model.

15. The method according to any one of claims 8 to 14, wherein before the sending, by the second network function, the first message to the first network function, the method further comprises:
receiving, by the second network function, a sixth message from a first device, wherein the sixth message is used to request to obtain the target model, and the target model comprises the positioning model.

16. The method according to claim 15, wherein the method further comprises:
sending, by the second network function, a seventh message to the first device, wherein the seventh message comprises the related information of the target model.

17. The method according to any one of claims 8 to 14, wherein before the sending, by the second network function, the first message to the first network function, the method further comprises:
receiving, by the second network function, an eighth message from a second device, wherein the eighth message is used to request to obtain positioning information.

18. The method according to claim 17, wherein the method further comprises:
determining, by the second network function, the positioning information based on the target model and positioning-related data in a case that the target model is obtained.

19. A network function discovery method, comprising:
receiving, by a third network function, a fourth message from a second network function, wherein the fourth message is used to request to obtain a target model, and the target model comprises a positioning model.

20. The method according to claim 19, wherein the fourth message comprises at least one piece of the following information:
eighteenth information indicating that the target model is requested to be obtained;
nineteenth information indicating a use object of the target model;
twentieth information indicating a use area of the target model;
twenty-first information indicating a positioning case of the target model;
twenty-second information indicating an inference manner of the target model;
twenty-third information indicating an inference result type of the target model;
twenty-fourth information indicating an input data type of the target model; and
twenty-fifth information indicating a task type of the target model.

21. The method according to claim 19 or 20, wherein the method further comprises:
sending, by the third network function, a fifth message to the second network function based on the fourth message, wherein the fifth message comprises related information of the target model, and the target model is a model obtained by the third network function through pre-training, or a model obtained by the third network function through training based on the fourth message.

22. The method according to claim 21, wherein the related information of the target model comprises at least one of the following:
address information of the target model;
a model file corresponding to the target model;
identification information of the target model; and
related information of a network function storing the target model.

23. The method according to any one of claims 19 to 22, wherein the method further comprises:
sending, by the third network function, a third message to a first network function, wherein the third message is used to request to register related information of the third network function, the third message comprises tenth information, the tenth information indicates that the third network function supports a model training capability, and the model training capability comprises a positioning model training capability.

24. The method according to claim 23, wherein the third message further comprises at least one piece of the following information:
eleventh information indicating a use object of a model corresponding to the model training capability;
twelfth information indicating a use area of the model corresponding to the model training capability;
thirteenth information indicating a positioning case of the model corresponding to the model training capability;
fourteenth information indicating an inference manner of the model corresponding to the model training capability;
fifteenth information indicating an inference result type of the model corresponding to the model training capability;
sixteenth information indicating an input data type of the model corresponding to the model training capability; and
seventeenth information indicating a task type of the model corresponding to the model training capability.

25. A network function discovery method, comprising:
sending, by a first device, a sixth message to a second network function, wherein the sixth message is used to request to obtain a target model, and the target model comprises a positioning model.

26. The method according to claim 25, wherein the method further comprises:
receiving, by the first device, a seventh message from the second network function, wherein the seventh message comprises related information of the target model.

27. The method according to claim 26, wherein the related information of the target model comprises at least one of the following:
address information of the target model;
a model file corresponding to the target model;
identification information of the target model; and
related information of a network function storing the target model.

28. A network function registration method, comprising:
receiving, by a first network function, a third message from a third network function, wherein the third message is used to request to register related information of the third network function, the third message comprises tenth information, the tenth information indicates that the third network function supports a model training capability, and the model training capability comprises a positioning model training capability.

29. The method according to claim 28, wherein the third message further comprises at least one piece of the following information:
eleventh information indicating a use object of a model corresponding to the model training capability;
twelfth information indicating a use area of the model corresponding to the model training capability;
thirteenth information indicating a positioning case of the model corresponding to the model training capability;
fourteenth information indicating an inference manner of the model corresponding to the model training capability;
fifteenth information indicating an inference result type of the model corresponding to the model training capability;
sixteenth information indicating an input data type of the model corresponding to the model training capability; and
seventeenth information indicating a task type of the model corresponding to the model training capability.

30. A network function registration method, comprising:
sending, by a third network function, a third message to a first network function, wherein the third message is used to request to register related information of the third network function, the third message comprises tenth information, the tenth information indicates that the third network function supports a model training capability, and the model training capability comprises a positioning model training capability.

31. The method according to claim 30, wherein the third message further comprises at least one piece of the following information:
eleventh information indicating a use object of a model corresponding to the model training capability;
twelfth information indicating a use area of the model corresponding to the model training capability;
thirteenth information indicating a positioning case of the model corresponding to the model training capability;
fourteenth information indicating an inference manner of the model corresponding to the model training capability;
fifteenth information indicating an inference result type of the model corresponding to the model training capability;
sixteenth information indicating an input data type of the model corresponding to the model training capability; and
seventeenth information indicating a task type of the model corresponding to the model training capability.

32. A network function discovery apparatus, applied to a first network function, wherein the apparatus comprises:
a first receiving module, configured to receive a first message from a second network function, wherein the first message is used to request to discover a network function supporting a model training capability, and the model training capability comprises a positioning model training capability; and
a sending module, configured to send a second message to the second network function, wherein the second message is used to feed back a network function discovery result.

33. The apparatus according to claim 32, further comprising:
a processing module, configured to determine the target network function based on the first message, wherein information about the target network function matches information in the first message.

34. The apparatus according to claim 33, wherein the processing module is specifically configured to perform at least one of the following:
determine the target network function based on first information in a case that the first message comprises the first information and the first information indicates that the network function requested to be discovered needs to support the model training capability, wherein the target network function is a network function supporting the model training capability;
determine the target network function based on second information in a case that the first message comprises the second information and the second information indicates a use object of a model trained by the network function requested to be discovered, wherein a use object of a model trained by the target network function matches the second information;
determine the target network function based on third information in a case that the first message comprises the third information and the third information indicates a use area of the model trained by the network function requested to be discovered, wherein a use area of the model trained by the target network function matches the third information;
determine the target network function based on fourth information in a case that the first message comprises the fourth information and the fourth information indicates a positioning case of the model trained by the network function requested to be discovered, wherein a positioning case of the model trained by the target network function matches the fourth information;
determine the target network function based on fifth information in a case that the first message comprises the fifth information and the fifth information indicates an inference manner of the model trained by the network function requested to be discovered, wherein a model inference manner of the model trained by the target network function matches the fifth information;
determine the target network function based on sixth information in a case that the first message comprises the sixth information and the sixth information indicates an inference result type of the model trained by the network function requested to be discovered, wherein an inference result type of the model trained by the target network function matches the sixth information;
determine the target network function based on seventh information in a case that the first message comprises the seventh information and the seventh information indicates an input data type of the model trained by the network function requested to be discovered, wherein an input data type of the model trained by the target network function matches the seventh information; and
determine the target network function based on eighth information in a case that the first message comprises the eighth information and the eighth information indicates a task type of the model trained by the network function requested to be discovered, wherein a task type of the model trained by the target network function matches the eighth information.

35. The apparatus according to claim 33 or 34, further comprising:
a second receiving module, configured to receive a third message from the target network function, wherein the third message is used to request to register related information of the target network function.

36. A network function discovery apparatus, applied to a second network function, wherein the apparatus comprises:
a first sending module, configured to send a first message to a first network function, wherein the first message is used to request to discover a network function supporting a model training capability, and the model training capability comprises a positioning model training capability; and
a first receiving module, configured to receive a second message from the first network function, wherein the second message is used to feed back a network function discovery result.

37. The apparatus according to claim 36, wherein the second message comprises information about the target network function, and
the apparatus further comprises:
a second sending module, configured to send a fourth message to the target network function, wherein the fourth message is used to request to obtain a target model, and the target model comprises a positioning model.

38. The apparatus according to claim 37, further comprising:
a second receiving module, configured to receive a fifth message from the target network function, wherein the fifth message comprises related information of the target model.

39. The apparatus according to any one of claims 36 to 38, further comprising:
a third receiving module, configured to receive a sixth message from a first device, wherein the sixth message is used to request to obtain the target model, and the target model comprises the positioning model.

40. The apparatus according to claim 39, further comprising:
a third sending module, configured to send a seventh message to the first device, wherein the seventh message comprises the related information of the target model.

41. The apparatus according to any one of claims 36 to 38, further comprising:
a fourth receiving module, configured to receive an eighth message from a second device, wherein the eighth message is used to request to obtain positioning information.

42. The apparatus according to claim 41, further comprising:
a processing module, configured to determine the positioning information based on the target model and positioning-related data in a case that the target model is obtained.

43. A network function discovery apparatus, applied to a third network function, wherein the apparatus comprises:
a receiving module, configured to receive a fourth message from a second network function, wherein the fourth message is used to request to obtain a target model, and the target model comprises a positioning model.

44. The apparatus according to claim 43, further comprising:
a first sending module, configured to send a fifth message to the second network function based on the fourth message, wherein the fifth message comprises related information of the target model, and the target model is a model obtained by the third network function through pre-training, or a model obtained by the third network function through training based on the fourth message.

45. The apparatus according to claim 43 or 44, further comprising:
a second sending module, configured to send a third message to a first network function, wherein the third message is used to request to register related information of the third network function, the third message comprises tenth information, the tenth information indicates that the third network function supports a model training capability, and the model training capability comprises a positioning model training capability.

46. A network function discovery apparatus, applied to a first device, wherein the apparatus comprises:
a sending module, configured to send a sixth message to a second network function, wherein the sixth message is used to request to obtain a target model, and the target model comprises a positioning model.

47. The apparatus according to claim 46, further comprising:
a receiving module, configured to receive a seventh message from the second network function, wherein the seventh message comprises related information of the target model.

48. A network function registration apparatus, applied to a first network function, wherein the apparatus comprises:
a receiving module, configured to receive a third message from a third network function, wherein the third message is used to request to register related information of the third network function, the third message comprises tenth information, the tenth information indicates that the third network function supports a model training capability, and the model training capability comprises a positioning model training capability.

49. A network function registration apparatus, applied to a third network function, wherein the apparatus comprises:
a sending module, configured to send a third message to a first network function, wherein the third message is used to request to register related information of the third network function, the third message comprises tenth information, the tenth information indicates that the third network function supports a model training capability, and the model training capability comprises a positioning model training capability.

50. A communication device, comprising a processor and a memory, wherein the memory stores a program or instructions capable of running on the processor, and the program or the instructions are executed by the processor to implement steps of the network function discovery method according to any one of claims 1 to 7, the network function discovery method according to any one of claims 8 to 18, the network function discovery method according to any one of claims 19 to 24, the network function discovery method according to any one of claims 25 to 27, the network function registration method according to claim 28 or 29, or the network function registration method according to claim 30 or 31.

51. A readable storage medium, wherein the readable storage medium stores a program or instructions, and the program or the instructions are executed by a processor to implement steps of the network function discovery method according to any one of claims 1 to 7, the network function discovery method according to any one of claims 8 to 18, the network function discovery method according to any one of claims 19 to 24, the network function discovery method according to any one of claims 25 to 27, the network function registration method according to claim 28 or 29, or the network function registration method according to claim 30 or 31.
